# NEUE EUROPÄISCHE PATENTSCHRIFT

(11) **EP 3 556 736 B3**
(45) Veröffentlichungstag dieser Patentschrift: **17.12.2025**
(45) Hinweis auf die Patenterteilung: 25.10.2023
(21) Anmeldenummer: 19169245.8
(22) Anmeldetag: 15.04.2019
(51) Int. Cl.: C03C 17/32, C03C 17/34

(54) **BEDRUCKTE GERÄTEKOMPONENTE**
PRINTED DEVICE COMPONENT
COMPOSANT IMPRIMÉ D'APPAREIL

(30) Priorität: 17.04.2018 DE 102018109102
(43) Veröffentlichungstag der Anmeldung: 23.10.2019
(73) Patentinhaber: SCHOTT AG, 55122 Mainz (DE)
(72) Erfinder: Weber, Urban, 55413 Weiler bei Bingen (DE); Gheczy, Inga, 65193 Wiesbaden (DE); Drewke, Jochen, 55128 Mainz (DE); Duval, Kevin, Penetanguishene, Ontario L9M 1G4 (CA); Alousis, Lucas, Midhurst, Ontario L0L 1X1 (CA); Mangold, Stephanie, 55270 Klein-Winternheim (DE)
(74) Vertreter: Blumbach · Zinngrebe Patentanwälte PartG mbB

(56) Entgegenhaltungen:
- EP-A1- 3 034 312
- WO-A1-2015/077035
- WO-A1-2019/103980
- AR-A1- 015 210
- DE-A1- 102016 111 162
- GB-A- 848 445
- IT-A1- MI20 091 870
- JP-A- H0 717 785
- KR-B1- 100 958 078
- US-A- 3 867 404
- US-A- 3 884 955
- US-A- 3 897 439
- US-A- 3 922 436
- US-A- 4 058 401
- US-A- 4 138 255
- US-A- 4 161 478
- US-A- 4 175 972
- US-A- 4 262 120
- US-A- 4 356 233
- US-A- 4 415 685
- US-A- 4 579 949
- US-A- 4 585 878
- US-A- 4 722 947
- US-A- 4 783 540
- US-A- 4 791 204
- US-A- 4 891 241
- US-A- 4 978 768
- US-A- 5 006 573
- US-A- 5 074 918
- US-A- 5 178 952
- US-A- 5 194 088
- US-A- 5 411 585
- US-A- 5 562 951
- US-A- 5 562 969
- US-A- 5 567 235
- US-A- 5 571 359
- US-A- 5 656 336
- US-A- 6 136 382
- US-A1- 2005 025 891
- US-A1- 2005 069 714
- US-B1- 6 413 618
- ZA-B- 9 811 916

## Beschreibung

Die von der Anmelderin beim deutschen -Patentamt eingereichten Patentanmeldungen mit den Anmeldenummern 10 2016 014 143.3und 10 2016 014 469.6 sind Bestandteil der vorliegenden Anmeldung.

### Gebiet der Erfindung

Die Erfindung betrifft im Allgemeinen Glasartikel als Komponenten für Haushaltsgeräte. Im Speziellen betrifft die Erfindung Glasartikel in Form von Gerätekomponeneten von elektrischen Geräten, insbesondere in Form einer Blende, beispielsweise einer Bedien- oder Dekorblende für Haushaltsgeräte sowie ein Verfahren zur Herstellung einer entsprechenden Blende.

Unter einer Gerätekomponente im Sinne der Erfindung wird dabei insbesondere ein Bauteil des Gerätegehäuses verstanden. Typischerweise handelt es sich bei den Gerätekomponenten im Sinne der vorliegenden Erfindung um Blenden, beispielsweise als Teil der äußeren Gehäuseabdeckung des jeweiligen elektronischen Gerätes. Gerätekomponenten als Bestandteile des Gerätegehäuses sind dabei in Hinblick auf technische Funktionen wie beispielsweise die Abschirmung des Geräteinneren von äußeren Einflüssen, die Reflexion oder Absorption von elektromagnetischer Strahlung aus dem Geräteinneren wie auch in Hinblick auf eine Erhöhung der Bedienfreundlichkeit für den Anwender, beispielsweise durch eine vereinfachte Reinigung des Gerätes von Bedeutung. Gleichzeitig sollen die Gerätekomponenten eine dekorative Funktion erfüllen wie beispielsweise ein bestimmtes Design aufweisen oder die technischen Komponenten im Geräteinneren optisch abschirmen.

Insbesondere trifft dies für Bedien- und/oder Dekorblenden von Haushaltsgeräten wie beispielsweise von Herden, Backöfen, Waschmaschinen, Mikrowellen oder Spülmaschinen zu. Auf Grund des optischen Erscheinungsbildes wie auch der vorteilhaften mechanischen und chemischen Eigenschaften haben sich hierbei insbesondere Bedien- und Dekorblenden aus Flachglas durchgesetzt. Ein Großteil der gewünschten Funktionen kann hierbei jedoch nur mit Hilfe einer Beschichtung und/oder eines Druckes auf der Glasoberfläche erreicht werden.

Gleichzeitig werden hohe Anforderungen an die mechanische und chemische Stabilität der Beschichtung bzw. des Drucks gestellt. So müssen Beschichtungen und Drucke je nach Anwendung eine hohe Resistenz gegenüber hohen Temperaturen, mechanischen Einflüssen wie auch gegenüber chemischen Angriffen durch Reinigungsmittel oder Wasserdampf aufweisen. Hierbei ist die Adhäsion der Beschichtung bzw. des Drucks auf der Glasoberfläche von entscheidender Bedeutung für die Funktionalität sowie des optischen Erscheinungsbildes der Gerätekomponente über die gesamte Lebensdauer des Gerätes.

Aus dem Stand der Technik sind hierbei Gerätekomponenten bekannt, bei denen eine Beschichtung mittels Siebdruck auf die Glasoberfläche aufgebracht wird. Zwar zeigen die mittels Siebdruck aufgebrachten Beschichtungen eine gute mechanische und chemische Stabilität, jedoch weist die Beschichtungstechnik Siebdruck mehrere Nachteile auf.

So müssen zum einen für jedes zu druckende Design die entsprechenden Siebe aufwändig hergestellt werden. Dies ist erst ab einer bestimmten Stückzahl an bedruckten Gerätekomponenten rentabel. Bei Haushaltsgeräten werden jedoch zunehmend kleinere Serien gefertigt, bei denen ein Siebdruck aus ökonomischen Gesichtspunkten nicht rentabel ist.

Des Weiteren muss beim Siebdruck für jede zu druckende Farbe ein entsprechendes Sieb hergestellt werden. Jede Farbe wird dabei in einem separaten Fertigungsschritt aufgetragen und jede aufgetragene Schicht muss vor einem erneuten Auftrag thermisch behandelt werden. Daher ist die Anzahl der Farbtöne bei einer mit Siebdruck aufgebrachten Beschichtung begrenzt. Ein weiterer Nachteil eines Aufdrucks per Siebdruck liegt in der begrenzten Auflösung. So wird beim Siebdruck die zu erreichende Auflösung durch die Maschengröße des Siebes begrenzt.

Aus der US 6136382 sind Beschichtungen bekannt, welche durch UV-Strahlung gehärtet werden. Somit besteht hier nicht länger die Notwendigkeit einer thermischen Behandlung der aufgebrachten Schichten. Die in der US 6136382 beschriebenen Beschichtungen basieren auf organischen Polymeren und werden als Dekorbeschichtungen auf Glasoberflächen aufgebracht.

Um die Anhaftung auf dem Glassubstrat zu erhöhen, werden die später mit dem Dekordruck versehenen Bereiche des Glassubstrates mit einem silanbasierten Haftvermittler beschichtet. Die EP 3034312 A1 beschreibt ebenfalls strahlungshärtende Drucktinten zum Bedrucken von Glas. Zum Schutz vor mechanischen Beanspruchungen kann hierbei die bedruckte Glasoberfläche mit einem weiteren Flachglas abgedeckt werden.

Aus der DE 10 2016 113 162 A1 sind Bedienblenden mit einer Benutzerschnittstelle für ein Haushaltsgerät bekannt. Hierbei weist die Bedienblende einen ebenen Träger mit einer dem Außenbereich zugewandter, äußeren Trägeroberfäche mit einem Anzeigeelement zur leuchtenden Darstellung von Informationen auf. Weiterhin kann die Bedienblende auf der Trägeroberfläche eine dekorative Beschichtung aufweisen.

### Aufgabe der Erfindung

Es ist daher eine Aufgabe der Erfindung, ein Verfahren bereit zu stellen, mit dem auch bei geringen Stückzahlen eine mehrfarbige Beschichtung mit hoher chemischer und mechanischer Stabilität sowie hoher Auflösung auf ein gläsernes Flachglas aufgebracht und somit eine entsprechende Gerätekomponente erhalten werden kann. Eine weitere Aufgabe besteht in der Bereitstellung einer bedruckten Gerätekomponente aus Flachglas.

### Kurzbeschreibung der Erfindung

Die oben beschriebenen Aufgaben werden bereits durch den Gegenstand der unabhängigen Patentansprüche gelöst. Vorteilhafte Ausgestaltungen und Weiterbildungen der Erfindung sind Gegenstand der Unteransprüche.

Die Erfindung betrifft ein Verfahren zur Herstellung einer Gerätekomponente mit betrieblicher Vorderseite und Rückseite für ein Haushaltsgerät, insbesondere ein elektrisches oder elektronisches Haushaltsgerät gemäss Anspruch 1.

Das in Schritt a) bereitgestellte Glassubstrat ist ein gehärtetes Flachglas, bevorzugt ein thermisch vorgespanntes Flachglas und weist zwei Oberflächen auf. In Schritt b) wird die Zubereitung zur Herstellung der Haftvermittlerschicht nur auf eine Oberfläche des Glassubstrats aufgebracht, wobei die Oberfläche des Glassubstrates, auf die die Zubereitung aufgebracht wird, die betriebliche Rückseite der herzustellenden Gerätekomponente bildet. Unter der betrieblichen Rückseite wird dabei die Oberfläche der Gerätekomponente verstanden, welche in den Geräteinnenraum zeigt. Entsprechend wird unter der betrieblichen Vorderseite die Oberfläche der Gerätekomponente verstanden, die zum Anwender zeigt.

Bevorzugt handelt es sich bei dem in Schritt a) bereit gestelltem Glas um ein thermisch vorgespanntes Kalk-Natronglas. Insbesondere weist das Glas folgende Bestandteile in Gew.-% auf:

| | |
|---|---|
| SiO₂ | 70 bis 76 Gew.-% |
| Na₂O | 11 bis 17 Gew.-% |
| CaO | 8 bis 16 Gew.-% |

Ebenso kann als Substrat auch eine Glaskeramik verwendet werden, wie sie üblicherweise auch für Glaskeramikkochflächen eingesetzt wird. Es kann sich z.B. um ein Lithium-Aluminium-Silikat-Glaskeramik handeln, welche keine Volumenfärbung aufweist und eine Transparenz ähnlich einer Glasscheibe aufweist.

Die in Schritt b) aufgebrachte Zubereitung weist polymerisierbare Monomere auf, wobei zumindest ein Teil der Monomere zumindest eine funktionelle Gruppe aufweist, welche mit der Glasoberfläche des Substrates eine Bindung eingehen kann. In Schritt c) erfolgt die Herstellung der Haftvermittlerschicht durch zumindest teilweise Polymerisation der in Schritt b) aufgetragenen Zubereitung. Die Polymerisation führt dabei insbesondere zu einer Vernetzung der Monomere unter Bildung von Kohlenstoff-Kohlenstoff-Bindungen oder unter Bildung von Silizium-Sauerstoffbindungen.

Gemäß einer Variante erfolgt in Schritt c) die Vernetzung der Monomere unter Bildung von Kohlenstoff- Kohlenstoff-Bindungen durch radikalische Polymerisation. Hierbei ist die Vernetzung ein vergleichsweise schneller Prozess. Im Gegensatz zu Schichten, die mittels Siebdruck aufgebracht und anschließend bei hohen Temperaturen eingebrannt werden, muss in oder nach Schritt c) das beschichtete Substrat nicht erhitzt werden. Dies ist zum einen vorteilhaft, da so die zum Aufheizen notwendige Energie eingespart werden kann und der Beschichtungsvorgang weniger Zeit in Anspruch nimmt. Ein weiterer Vorteil des erfindungsgemäßen Verfahrens liegt darin, dass durch die mit einem Siebdruckprozess verglichenen wesentlich geringeren Temperaturen des Glassubstrates eine thermische Vorspannung des Glases nicht abgebaut wird. Daher werden beim erfindungsgemäßen Verfahren bevorzugt thermisch vorgespannte Flachgläser als Substrat eingesetzt. Entsprechende Vorteile weist auch die in den Schritten d) und e) hergestellte farbgebende Schicht auf.

Bevorzugt erfolgt die radikalische Polymerisation photoinduziert. Gemäß einer Ausführungsform der Erfindung weist die in Schritt b) und/oder die in Schritt e) aufgebrachte Zubereitung einen Photoinitiator auf. Als besonders vorteilhaft haben sich hierbei als Photoinitiatoren Triphenylphosphinoxide, Diphenylphosphinoxide, 2-Methyl-4'-(methylthio)-2-morpholinopropiophenon, [4-[(4-methylphenyl)thio]phenyl]phenyl-; 4-(4-Methylphenylthio)benzophenon, 2,4,6-Trimethylbenzoyl diphenylphosphinoxid und 2,2',4',6'-Tetramethylpropiophenon herausgestellt.

Eine Ausführungsform sieht vor, dass die in Schritt b) aufgebrachte Zubereitung und/oder die in Schritt d) aufgebrachte Zubereitung 2 bis 18 Gew.-% an Photoinitiator aufweist. Hierdurch wird eine schnelle Polymerisation gewährleistet. Gleichzeitig kann über den Gehalt des Photoinitiators in der Zubereitung der Vernetzungsgrad eingestellt werden.

Alternativ oder zusätzlich enthält die in Schritt b) aufgebrachte Zubereitung eine Verbindung zur Unterdrückung der Sauerstoffinhibierung, bevorzugt ein Antioxidant oder ein Radikalfänger, enthält. Hierdurch kann ein Abbruch der Polymerisationsreaktion durch den Einbau von Sauerstoff vermieden werden, ohne dass die Polymerisation unter Schutzgas durchgeführt werden muss.

Gemäß einer Variante der Erfindung weist die in Schritt b) aufgebrachte Zubereitung zumindest ein Monomer mit Vinyl- und/oder Acrylgruppen als radikalisch polymerisierbare Gruppen auf. Die daraus resultierende Schicht bzw. das daraus resultierende Polymer ist transparent und weist bevorzugt eine geringe Eigenfärbung auf. Dies ist vorteilhaft, da die in Schritt c) erhaltene Haftvermittlerschicht als unterste Schicht auf dem Substrat aufgebracht wird und die beschichtete Seite des Substrats später im Gerät die betriebliche Rückseite der Gerätekomponente bildet. Somit liegt die in Schritt c) erzeugte Haftvermittlerschicht zwischen dem Glassubstrat und der in Schritt e) erzeugten Farbschicht und beim Einbau der Gerätekomponente in das jeweilige Gerät schaut der Anwender durch das Glas und die Haftvermittlerschicht auf die farbgebende Schicht. Eine Opazität oder eine Eigenfärbung der Haftvermittlerschicht würde sich demnach nachteilig auf das optische Erscheinungsbild der farbgebenden Schicht auswirken und ist daher zu vermeiden. Eine erste Variante sieht daher vor, dass die Transmission der Haftvermittlerschicht bei einer Schichtdicke von 5 µm +/-1 µm für Licht mit einer Wellenlänge im Bereich von 380 bis 780 nm bei einer Schichtdicke von 1-5 µm zumindest 80 %, bevorzugt zumindest 95% beträgt. Alternativ oder zusätzlich weist die Haftvermittlerschicht in einer zweiten Varianteeine mittlere Farbortverschiebung ΔE von weniger als 10, bevorzugt weniger als 5 auf. Unter der mittleren Farbortverschiebung wird dabei eine durchschnittliche Farbortverschiebung verstanden, die über die Farbortverschiebungen ΔE für alle Wellenlängen im sichtbaren Bereich des Lichtes, insbesondere für Licht mit einer Wellenlänge im Bereich von 380 nm bis 780 nm gemittelt wurde. Insbesondere ist die Farbortverschiebung ΔE abhängig von derjeweiligen Wellenlänge bzw. der jeweiligen Farbe, wobei die Farbortverschiebung ΔE mit zunehmender Wellenlänge der Farbe abnimmt. Gemäß dieser zweiten Variante der Erfindung weist die Haftvermittlerschicht eine Farbortverschiebung ΔE für die Farbe blau < 15, bevorzugt < 10, für die Farbe rot < 5, bevorzugt < 2 und für die Farbe grün < 6 bevorzugt < 4 auf.

Zudem sind Vinyle und Acrylate mit einer Vielzahl von verschiedenen Funktionalitäten erhältlich. So kann beispielsweise der Vernetzungsgrad über den Einsatz von multifunktionalen Acrylaten, d.h. von Acrylaten mit mehreren Acrylgruppen pro Monomereinheit eingestelltwerden. Als besonders vorteilhaft hat sich die Verwendung von Monomeren aus der Gruppe mit den Elementen Acrylsäureisobornylester, Hex-5-ensäure, Benzylacrylat, Tetrahydro-2-furanyl-methyl-2-propenonat herausgestellt.

Bevorzugt weist die in Schritt b) aufgebrachte Zubereitung zumindest ein Monomer mit einer Säuregruppe zur Anbindung an die Oberfläche des Glassubstrates auf. Hierdurch weist auch das in Schritt c) erzeugte Polymer bzw. die in Schritt c) erzeugte Schicht eine kovalente Anbindung zur Glasoberfläche auf, so dass die in Schritt c) erzeugte Schicht eine hohe Adhäsion zum Substrat zeigt. Gleichzeitig umfasst die in Schrittc) erzeugten Schicht eine organisches Polymer, so dass zwischen der in Schritt c) erzeugten Schicht und der in Schritt e) erzeugten Schicht eine gute Anhaftung besteht. Demnach fungiert die in Schritt c) abgeschiedene Schicht als Haftvermittlerschicht.

Gemäß einer Weiterbildung der Erfindung weist die in Schritt b) aufgebrachte Zubereitung zur Herstellung der Haftvermittlerschicht zumindest zwei verschiedene Acrylate als Monomere enthalten, wobei zumindest eines der Monomere eine aromatische Gruppe aufweist:

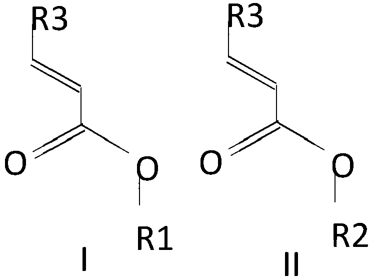

Wobei R1 ein aromatischer oder aliphatischer Rest und R2 ein aromatischer Rest ist. R3 kann eine Methylgruppe oder Wasserstoff sein. Werden Acrylate mit aromatischen Resten in das Polymer eingebaut, so weist dieses einen geringeren Polymerisationsschrumpf auf. Ein geringer Polymerisationsschrumpf ist dabei vorteilhaft, da sich so weniger Zugkräfte in der Schicht bilden. Schichten mit geringen Zugkräften sind dabei vorteilhaft, da diese, verglichen mit entsprechenden Schichten mit hohen Zugkräften, eine bessere Anhaftung der Haftvermittlerschicht an der Glasoberfläche sowie eine bessere Anhaftung der farbgebenden Schicht auf der Haftvermittlerschicht aufweisen. Alternativ oder zusätzlich weist die in Schritt b) aufgebrachte Zubereitung ein Monomer I mit einem sterisch anspruchsvollen aliphatischen Rest auf. Bevorzugt handelt es sich bei R1 daher um einen zyklischen Aliphaten, insbesondere um einen Isobornylrest oder einen Tetrahydrofuranylrest. Analog zu aromatischen Resten führen sterisch anspruchsvolle aliphatische Reste ebenfalls zu einer Verringerung des Polymerisationsschrumpfes. Gemäß einer Ausführungsform der Erfindung beträgt der Anteil an Monomeren mit einem aromatischen Rest 20 bis 70 Gew.-%, bevorzugt 40 bis 60 Gew.-%.

In einer bevorzugten Ausführungsform der Erfindung enthält die in Schritt b) aufgebrachte Zubereitung folgende Bestandteile:

| | Anteil in Gew.-% |
|---|---|
| Reaktivverdünner | 30 bis 90, bevorzugt 50 bis 75 |
| Monomer mit Säurefunktion | 5 bis 15 |
| Photoinitiator | 5 bis 20, bevorzugt 10 bis 18 |
| Radikalfänger | 0 bis 3 |

Gemäß einer bevorzugten Ausführungsform enthält die in Schritt b) aufgetragene Zubereitung folgenden Bestandteile:

| | Anteil in Gew.-% |
|---|---|
| Acrylic acid isobornyl ester, IBA | 46,10% |
| Hex-5-enoic acid | 10,40% |
| Benzyl acrylate | 17,40% |
| CN131B von Sartomer USA, LLC | 11,10% |
| Triphenylphosphinoxide | 2,50% |
| 2-Hydroxy-3-phenoxypropylacrylat | 8,10% |
| Glycidylphenylether | 0,80% |
| 3,4-bis-2-methoxyethylidene-2,4-hexadion | 2,40% |
| Butylhydroxytoluol | 0,80% |
| 2,2'-Methylenbis(4-methyl-6-tert-butylphenol) | 0,40% |

Eine andere Weiterbildung der Erfindung sieht vor, dass die in Schritt b) aufgebrachte Zubereitung als Monomere zumindest ein Silan, ein Silesesquioxan oder ein Vorhydrolisat eines Silans enthält. Gemäß dieser Weiterbildung erfolgt in Schritt c) die Polymerisation der Zubereitung durch eine Hydrolysereaktion unter Bildung von Silizium-SauerstoffBindungen. Hierbei haftet die in Schritt c) gebildete Schicht durch die Silanfunktionalitäten besonders gut an der Glasoberfläche. Durch die organischen Reste der Silane oder Silsesquionxane gewährleistet die in Schritt c) gebildete Haftvermittlerschicht eine gute Anhaftung der farbgebenden Schicht. Als besonders vorteilhaft hat sich dabei eine Zubereitung mit Silanen mit polymerisierbarer Gruppe, insbesondere mit Trialkoxysilanen mit polymerisierbarer Gruppe herausgestellt. Als polymerisierbare Gruppe haben sich besonders Acrylgruppen, Methacrylgruppen oder Vinylgruppen als vorteilhaft herausgestellt. Hierbei werden das bei der Hydrolyse der Silane gebildeten Polymere mit Si-O-Verknüpfung durch die polymerisierbaren Gruppen des organischen Restes miteinander vernetzt. Insbesondere enthält die in Schritt b) aufgebrachte Zubereitung Silane aus der Gruppe mit den Elementen 3-Methacryloxy-propyl-triehoxysilan, Triethoxyvinylsilan, 3-Methacryloxy-propyl-trimehoxysilan und Trimethoxyvinylsilan Si(OR)4, SiR(OR)3 und/oder Si2(OR)6, wobei vorzugsweise OR = Alkoxy wie vorzugsweise Methoxy, Ethoxy, n-Propoxy, i-Propoxy, Buthoxy, Isopropoxyethoxy, Methoxypropoxy, Phenoxy, Acetoxy, Propionyloxy, Ethanolamin, Diethanolamin, Triethanolamin, Methacryloxypropyloxy Glycidylpropyloxy, Acrylat, Methylacrylat, Acetylaceton, Ethylacetatessigester, Ethoxyacetat, Methoxyacetat, Methoxyethoxyacetat oder Methoxyethoxyethoxyacetat oder Mischungen daraus. In besonderen Ausführungsformen ist R vorzugsweise ein Methyl-, Ethyl-, n-Propyl-, Butyl-, Allyl-, Vinyl-, Aminopropyl- und/oder Fluoroctyl-Rest. X ist vorzugsweise Cl, Br, F oder eine Mischung aus diesen.

Eine Ausführungsform dieser Weiterbildung sieht vor, dass die in Schritt b) aufgetragene Zusammensetzung folgende Bestandteile umfasst:

| | Anteil in Gew.-% |
|---|---|
| Lösungsmittel | 70 bis 95, bevorzugt 80 bis 95 |
| Triethoxysilan mit polymerisierbarer Gruppe | 2 bis 10, bevorzugt 3 bis 8 |

Als Lösungsmittel werden insbesondere Alkohole wie Ethanol, Methanol, 2-Propanol oder Ether, beispielsweise Dipropylenglykolmonomethylether verwendet.

Gemäß einer weiteren Ausführungsform umfasst die in Schritt b) aufgetragene Zubereitung kolloidales Silica, Lösungsmittel, Wasser sowie ein Trialkoxysilan mit einer radikalisch polymerisierbaren Gruppe. Insbesondere enthält die Zubereitung 50 bis 90 Gew.-% Lösungsmittel, beispielsweise Ethanol, 1 bis 5 Gew.-% Silica, sowie weniger als 15 Gew.-% Wasser und 0,1 bis 2 Gew.-% eines Vinylsilans.

Die Zubereitung zur Herstellung der Haftvermittlerschicht kann in Schritt b) insbesondere mittels Digitaldruck, Sprühen, Aufwischen oder Rakeln der Zubereitung oder mittels Siebdruck auf das Glassubstrat aufgebracht werden.

Unter einem Digitaldruckverfahren im Sinne der Erfindung wird ein Druckverfahren verstanden, bei dem in elektronischer Form vorliegende Druckvorlagen ohne den Einsatz einer physikalischen Druckform, beispielsweise eines Siebes oder einer Schablone auf das zu bedruckende Substrat aufgebracht werden. Zu den Digitaldruckverfahren gehören Druckverfahren wie das Ink-Jet-Druckverfahren, das Laserdruckverfahren oder das Aerosol-Jet-Druckverfahren.

Hierbei kann die Zubereitung in Schritt b) vollflächig auf das Glassubstrat aufgebracht werden. Jedoch ist es auch möglich, die Zubereitung lateral strukturiert, d.h. nur auf Teilbereichen des Glassubstrates aufzubringen. Dies bietet sich beispielsweise an, wenn nur Teilbereiche des Flachglases mit einerfarbgebenden Schicht beschichtet werden sollen, beispielsweise wenn ein Fenster für ein Display in der Gerätekomponente ausgespart werden soll.

Gemäß einer Weiterbildung der Erfindung erfolgt das Aufbringen der Zubereitung zur Herstellung der Haftermittlerschicht in Schritt b) auf ein Glassubstrat, dessen Temperatur zumindest 50°C, bevorzugt im Bereich von 50 bis 100°C beträgt. Insbesondere erfolgt das Aufbringen der Zubereitung in Schritt b) unmittelbar nach einem thermischen Vorspannen des in Schritt a) bereit gestellten Glassubstrates. Durch das Aufbringen der Zubereitung zur Herstellung der Haftvermittlerschicht in Schritt b) auf eine warme Glasscheibe erfolgt eine Vorvernetzung, d.h. ein teilweises Aushärten der in Schritt b) aufgetragenen Beschichtung durch thermische Härtung. Dies ist zum einen vorteilhaft, da so bereits ohne UV-Bestrahlung eine Vernetzung innerhalb der in Schritt b) aufgetragenen Beschichtung erfolgt. Des Weiteren erfolgt durch das thermische Vorspannen eine Aktivierung der Glasoberfläche, welche die Anhaftung der Haftvermittlerschicht an die Glasoberfläche noch weiter verbessert. Gemäß einer Ausführungsform der Erfindung erfolgt Schritt b) daher nach weniger als 3 Tagen, bevorzugt nach weniger als einem Tag und besonders bevorzugt nach weniger als 3 Stunden nach der thermischen Vorspannung des Substrates.

Gemäß einer Weiterbildung der Erfindung erfolgt durch den Auftrag der Zubereitung in Schritt b) auf eine heiße Glasoberfläche eine Vorvernetzung, durch welche die Haftvermittlerschicht bereits eine ausreichend hohe Stabilität aufweist, so dass auch ohne weitere Vernetzung mittels UV-Bestrahlung in Schritt d) die Zubereitung zur Herstellung der farbgebenden Schicht auf die Haftvermittlerschicht aufgebracht werden kann. In dieser Ausführungsform der Erfindung erfolgt die Aushärtung der Haftvermittlerschicht gemeinsam mit der farbgebenden Schicht in Schritt e). durch die gemeinsame Vernetzung kann hierbei eine noch bessere Haftung zwischen der Haftvermittlerschicht und der farbgebenden Schicht erreicht werden.

Eine Ausführungsform der Erfindung sieht vor, dass das in Schritt a) bereit gestellte Flachglas ein sog. Floatglas ist. Entsprechende Gläser weisen dabei eine Seite auf, die bei der Herstellung des Glases mit einem Zinnbad in Kontakt kam. Die andere Seite des Glases stand dabei während des Herstellungsverfahrens in Kontakt mit der umgebenden Atmosphäre. Es hat sich hierbei herausgestellt, dass es für die Anhaftung der Haftvermittlerschicht an der Glasoberfläche vorteilhaft ist, wenn die Glasseite, die in Kontakt mit dem Zinnbad stand, die betriebliche Vorderseite der Gerätekomponente bildet.

Beim erfindungsgemäßen Verfahren enthält die in Schritt d) aufgebrachte Zubereitung radikalisch polymerisierbare Monomere und zumindest einen Farbstoff. In Schritt e) erfolgt die Herstellung der farbgebenden Schicht, im Folgenden auch als organische Farbschicht bezeichnet, durch radikalische Polymerisation der Monomere unter Bildung von Kohlenstoff-Kohlenstoff-Bindungen.

Die Zubereitung zur Herstellung der farbgebenden Schicht ist dabei so stabil, dass sie in Schritt d) mittels Digitaldruck, insbesondere durch ein Ink-Jet-Druckverfahren, aufgetragen werden kann. Eine Polymerisation findet somit erst nach der Abscheidung statt.

Das Aufbringen der farbgebenden Schicht mittels Digitaldruck ist dabei unter mehreren Aspekten vorteilhaft. Zum einen müssen anders als beim Siebdruck keine Siebe hergestellt werden, so dass das erfindungsgemäße Verfahren auch bei Serien mit geringen Stückzahlen rentabel ist. Des Weiteren können mit Hilfe des Digitaldrucks auch farbgebende Schichten mit verschiedenen Farbtönen erhalten werden. Hierzu werden mehrere Zubereitungen, die sich durch die enthaltenen Farbstoffe unterscheiden, in einem Druckvorgang aufgebracht. Die Auflösung des Drucks ist hier nicht durch eine Maschenweite begrenzt, noch wird die Anzahl der aufgebrachten Farbtöne durch einen mehrstufigen Prozess begrenzt. Vielmehr können Farbtöne auch durch Mischen von verschiedenen Zubereitungen im Druckkopf erhalten werden.

Bevorzugt erfolgt die radikalische Polymerisation photoinduziert. Gemäß einer Ausführungsform der Erfindung enthält die in Schritt d) aufgebrachte Zubereitung einen Photoinitiator auf. Als besonders vorteilhaft haben sich hierbei als Photoinitiatoren Triphenylphosphinoxide, Diphenylphosphinoxide, 2-Methyl-4'-(methylthio)-2-morpholinopropiophe-non, [4-[(4-methylphenyl)thio]phenyl]phenyl-4-(4-Methylphenylthio)benzophenon, 2,4,6-Trimethylbenzoyl diphenylphosphinoxid und 2,2',4',6'-Tetramethylpropiophenon herausgestellt. Eine Ausführungsform sieht vor, dass die in Schritt d) aufgebrachte Zubereitung 1 bis 20 Gew.-%, bevorzugt 10 bis 18 Gew.-% an Photoinitiator aufweist. Hierdurch wird eine schnelle Polymerisation gewährleistet. Gleichzeitig kann über den Gehalt des Photoinitiators in der Zubereitung der Vernetzungsgrad eingestellt werden.

Alternativ oder zusätzlich enthält die in Schritt d) aufgebrachte Zubereitung eine Verbindung zur Unterdrückung der Sauerstoffinhibierung, bevorzugt ein Antioxidant oder ein Radikalfänger, enthält. Hierdurch kann ein Abbruch der Polymerisationsreaktion durch den Einbau von Sauerstoff vermieden werden, ohne dass die Polymerisation unter Schutzgas durchgeführt werden muss.

Im Gegensatz zu Schichten, die mittels Siebdruck aufgebracht und anschließend bei hohen Temperaturen eingebrannt werden, muss in Schritt d) das beschichtete Substrat nicht erhitzt werden. Zusätzlich zu den bereits oben beschriebenen Vorteilen bietet das erfindungsgemäße Verfahren somit auch die Möglichkeit, Farbstoffe mit einer geringeren Temperaturstabilität einzusetzen. Eine Ausführungsform der Erfindung sieht dabei vor, dass die in Schritt d) aufgebrachte Zubereitung organische Farbstoffe enthält. Gemäß einer Ausführungsform der Erfindung beträgt der Farbstoffanteil in der Zubereitung 1 bis 10, bevorzugt 2 bis 4 Gew.-%. Bevorzugt weisen die verwendeten Farbstoffe eine hohe Fotostabilität auf. Insbesondere zeigen die verwendeten Farbstoffe eine Lichtbeständigkeit gemäß DIN EN ISO 105-B02. Insbesondere sind Farbstoffe aus der Gruppe mit den Elementen Benzimidazolone, Bisacetoacetarylide, Isoindoline, Quinacridone und Phtalocyanine geeigent.

Um die Farbstabilität der in Schritt e) erzeugten Farbschicht auch über die Lebensdauer des jeweiligen Gerätes zu gewährleisten, kann die Zubereitung einen Lichtstabilisator enthalten. Als Lichtstabilisatoren können beispielsweise HALS oder aromatische Verbindungen mit ausgedehnten π-Systemen verwendet werden. Als besonders geeignete Lichtstabilisatoren haben Hydrochinone, MEHQ und Piperidin-Derivate herausgestellt.

Gemäß einer Ausführungsform der Erfindung enthält die in Schritt d) aufgebrachte Zubereitung zur Herstellung der organischen Farbschicht Acrylate als Monomere. Bevorzugt enthält die Zubereitung einen Reaktivverdünner und zumindest ein difunktionelles, bevorzugt zumindest ein trifunktionelles Acrylat. Durch den Reaktivverdünner kann die Viskosität eingestellt werden, so dass eine druckbare Zubereitung erhalten werden kann. Da der Reaktivverdünner in Schritt e) ebenfalls polymerisiert und so ein kovalent vernetzter Bestandteil der polymeren Matrix der farbgebenden Schicht wird, ist der Polymerisationsschrumpf relativ gering, was sich günstig auf die Zugspannung in der Schicht auswirkt. Zudem muss nach der Polymerisation kein Lösungsmittel entfernt werden.

Durch die Verwendung von zumindest difunktionellen oder sogar zumindest trifunktionellen Acrylaten in der Zubereitung wird dabei eine gute Vernetzung des Polymers gewährleistet. Als besonders vorteilhaft haben sich hierbei die folgenden multifunktionellen Acrylate herausgestellt: Dipentylerythriolhexaacrylat und/oder Diacrylate wie beispielsweise Sartomer 44. Insbesondere enthält die in Schritt d) aufgebrachte Zubereitung Hexan-1,6-dioldiacrylat, Tetrahydro-2-furanyl-methyl-2-prooenoate, 1-Mesityl-2-methyl-1-propanon, Dipentylerythriolhexaacrylat

Eine Ausführungsform der Erfindung sieht vor, die Schritte d) und e) mehrfach durchzuführen. Hierbei werden mehrere Farbschichten aufgetragen. Hierdurch kann beispielsweise die Farbintensität gesteigert oder Farbeffekte durch Überlagerung mehrerer Farbschichten erhalten werden. Bevorzugt werden die Schritte d) und e) 2 mal, besonders bevorzugt 3 mal durchgeführt.

Eine Weiterbildung der Erfindung sieht vor, dass in einem dem Schritt e) nachfolgenden Schritt f) eine Deckschicht auf die farbgebende Schicht aufgebracht wird. Die Deckschicht kann beispielsweise durch Siebdruck, Digitaldruck, Aufwischen oder Rakeln aufgebracht werden. Bevorzugt wird die Deckschicht auf der gesamten Farbschicht aufgebracht und ist opak. Hierbei kann die Deckschicht auch lateral strukturiert aufgebracht werden, d.h. einzelne Bereiche der Oberfläche der Gerätekomponente können ausgespart werden.

Durch das Aufbringen einer hellen Deckschicht kann zum einen die Farbintensität der Farbschicht optisch erhöht werden, gleichzeitig wird eine Durchsicht durch die Gerätekomponente in das Innere des Gerätes verhindert. Des Weiteren wird durch die Deckschicht die Farbschicht versiegelt, was in Hinblick auf die chemische Beständigkeit der Farbschicht vorteilhaft sein kann.

Des Weiteren betrifft die Erfindung eine Gerätekomponente mit betrieblicher Vorderseite und Rückseite für ein Haushaltsgerät umfassend ein Substrat aus vorgespanntem Flachglas mit einer Beschichtung. Die Beschichtung ist auf der betrieblichen Rückseite angeordnet und umfasst zumindest eine Haftvermittlerschicht und zumindest eine organische Farbschicht umfasst. Die organische Farbschicht umfasst eine polymere Matrix und zumindest ein Farbmittel und liegt als Digitaldruck vor. Die Haftvermittlerschicht umfasst eine polymere Matrix mit funktionellen Gruppen zur Anbindung an die Glasoberfläche und ist zwischen dem Glassubstrat und der organischen Farbschicht angeordnet.

Gemäß einer Weiterbildung der Erfindung umfasst die Haftvermittlerschicht ein organisches Polymer, bevorzugt ein organisches Polymer mit Monomereinheiten zumindest eines Monomers mit radikalisch polymerisierbaren Gruppen. Insbesondere enthält das Polymer der Haftvermittlerschicht Monomereinheiten, die durch Polymerisation von Monomeren mit Vinyl- und/oder Acrylgruppen gebildet werden. Die entsprechenden Polymere weisen neben einer hohen Temperaturstabilität sowie einer hohen chemischen und mechanischen Stabilität eine hohe Transparenz sowie eine geringe Verschiebung des Farbortes auf.

Gemäß dieser Weiterbildung der Erfindung weist das Polymer der Haftvermittlerschicht zumindest eine Monomereinheit mit einer Säuregruppe zur Anbindung an die Oberfläche des Glassubstrates auf. Somit zeigt die Haftvermittlerschicht eine hohe Adhäsion zum Substrat. Gleichzeitig umfasst die Haftvermittlerschicht ein organisches Polymer, so dass zwischen Haftvermittlerschicht und der Farbschicht eine gute Anhaftung herrscht, was sich vorteilhaft auf die mechanische Stabilität der gesamten Beschichtung auswirkt.

Eine Ausführungsform der Erfindung sieht vor, dass die Haftvermittlerschicht ein Copolymer mit zumindest den folgenden Monomereinheiten la und IIa und/oder IIIa umfasst: 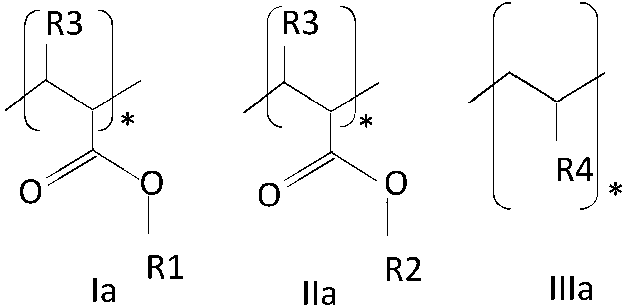 wobei R1 ein aromatischer Rest und R2 ein aliphatischer Rest oder eine aliphatische Säure und R3 Wasserstoff oder eine Methylgruppe ist. Bei R4 handelt es sich um einen aromatischen oder aliphatischen Rest. Werden Monomereinheiten mit aromatischen Resten oder sterisch anspruchsvollen aliphatischen Resten eingebaut, so zeigt das Polymer einen geringeren Polymerisationsschrumpf.

Gemäß einer Ausführungsform der Erfindung enthält die Haftvermittlerschicht einen Photoinitiator. Alternativ oder zusätzlich kann die Haftvermittlerschicht eine Verbindung zur Unterdrückung der Sauerstoffinhibierung, bevorzugt ein Antioxidant oder ein Radikalfänger, enthalten.

In einer anderen Variante der Erfindung ist das Polymer der Haftvermittlerschicht durch Si-O-Bindungen vernetzt. Ein entsprechendes Polymer ist dabei durch Hydrolyse eines Silans, eines Silesquioxans oder einer Vorhydrolysates eines Silans zugänglich und weist entsprechende Monomereinheiten auf. Insbesondere weist die Haftvermittlerschicht ein Polymer mit der Monomereinheit IVa auf:

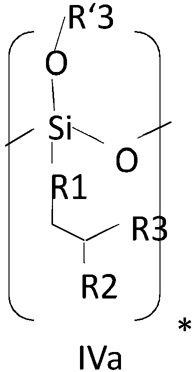

Der Rest R1 ist hierbei bevorzugt ein aliphatischer oder aromatischer Rest, über den Rest R3 kann beispielsweise eine Vernetzung des Polymers C-C-Bindungen und ober den Rest R'3 über Si-O-Si-Bindungen erfolgen. Der Rest R2 kann ein aliphatischer oder Rest sein. Insbesondere ist der Rest R2 ein aromatischer oder Aliphatischer Ester.

Über der Haftvermittlerschicht ist zumindest eine farbgebende Schicht angeordnet. Der Begriff "über" bezieht sich dabei auf die Schichtabfolge ausgehen vom Glassubstrat. Somit ist die Haftvermittlerschicht zwischen dem Glassubstrat und der farbgebenden Schicht angeordnet.

Eine Ausführungsform der Erfindung sieht vor, dass die farbgebende Schicht eine vernetzte Polyacrylmatrix mit zumindest einem in der Matrix eingebetteten Farbstoff umfasst. Insbesondere liegt die farbgebende Schicht als ein Digitaldruck mit zumindest zwei verschiedenen Farbstoffen vor, wobei lateral strukturierte Bereiche verschiedene Farbstoffe aufweisen.

Bevorzugt weist die farbgebende Schicht zumindest einen organischen Farbstoff, besonders bevorzugt zumindest einen organischen Farbstoff aus der Gruppe mit den Elementen Benzimidazolone, Bisacetoacetarylide, Isoindoline, Quinacridone und Phtalocyanine geeigent.

Durch die Verwendung von organischen Farbstoffen steht eine große Auswahl verschiedener Farbstoffe zur Verfügung. Da die Farbstoffe im Unterschied zu Pigmenten auch in organischen Lösungsmitteln und/oder dem zur Herstellung der farbgebenden Schicht eingesetzten Reaktivverdünner löslich sind, besteht nicht die Gefahr, dass beim Drucken der farbgebenden Schicht die Druckdüsen durch ungelöste Partikel verstopft werden.

Die in der farbgebenden Schicht enthaltenen Farbstoffe weisen vorzugsweise eine hohe Fotostabilität auf. Bevorzugt weisen die Farbstoffe eine Farbstabilität gemäß DIN EN ISO 105-B02 auf. Dies gewährleistet eine Farbstabilität der farbgebenden Schicht über die gesamte Lebensdauer des entsprechenden Gerätes. Die Farbstabilität der farbgebenden Schicht kann dabei durch Zugabe eines Lichtstabilisators erhöht werden. Als besonders vorteilhaft hat es sich hierbei herausgestellt, wenn die Farbschicht ein HALS oder Aromaten mit ausgedehnten π-Systemen enthält.

Gemäß einer weiteren Ausführungsform der Erfindung weist die Beschichtung zumindest eine zusätzliche zweite, bevorzugt eine zusätzliche dritte farbgebende Schicht auf. Alternativ oder zusätzlich weist die Beschichtung eine Deckschicht als oberste Schicht auf. Die Deckschicht ist dabei insbesondere als opake und/oder stark streuende Schicht ausgebildet. Hierdurch wird eine Durchsicht durch die Gerätekomponente in das Geräteinnere verhindert. Bevorzugt weist die Beschichtung eine integrale Transmission über den gesamten sichtbaren Bereich des Lichts von höchstens 10%, bevorzugt von höchstens 5 % auf. Hierdurch wird eine Durchsicht durch die Gerätekomponente in das Innere des Gerätes verhindert.

Gemäß einer Ausführungsform der Erfindung sind die Haftvermittlerschicht und die farbgebende Schicht gemeinsam miteinander vernetzt.

Eine Ausführungsform der Erfindung sieht vor, dass die Haftvermittlerschicht eine Schichtdicke im Bereich von 3 bis 8 µm, bevorzugt 4 bis 6 µm, die farbgebende Schicht eine Dicke im Bereich von 5 bis 35 µm, bevorzugt 7 bis 28 µm und/oder die Deckschicht eine Dicke im Bereich von 5 bis 35 µm aufweist. Insbesondere Beschichtungen mit den oben angegebenen Schichtdicken weisen eine hohe mechanische Stabilität auf.

Ein Maß für die mechanische Stabilität der Beschichtungen sowie die Anhaftung der Beschichtung auf dem Substrat ist die zur Delamination der Beschichtung von der Glasoberfläche benötigte Kraft. In einer Ausführungsform der Erfindung beträgt für Beschichtungen mit einer organischen Farbschicht 3,5 bis 5 N , für Beschichtungen mit zwei organischen Farbschichten 5 bis 7 N und für Beschichtungen mit drei organischen Farbschichten 14 bis 16 N. Die zur Delamination der Beschichtung benötigte Kraft wird mit Hilfe eines Kratzstiftes Elcometer 3092 Sclerometer Hardness Tester mit einer runden Prüfspitze aus Wolframcarbid mit einem Radius der Prüfspitze von 1,0 mm gemäß der Messnorm AS 3894.4 bestimmt.

Die Beschichtung ist auf der betrieblichen Rückseite der Gerätekomponente angeordnet. Somit wird die Beschichtung durch das Flachglas vor äußeren mechanischen Einflüssen geschützt. Bevorzugt ist das Flachglas thermisch vorgespannt. Durch die thermische Vorspannung wird die mechanische Festigkeit und Kratzfestigkeit des Glases erhöht. Um eine ausreichende mechanische Stabilität der Gerätekomponente zu gewährleisten, sieht eine Ausführungsform der Erfindung vor, dass das Glassubstrat eine Dicke von zumindest 2 mm aufweist. Bevorzugt weist das Glassubstrat eine Dicke im Bereich von 3 bis 8 mm, besonders bevorzugt eine Dicke im Bereich von 3,5 bis 5,5 mm auf.

Die Beschichtung kann auf der gesamten betrieblichen Rückseite der Gerätekomponente aufgebracht sein. Es ist jedoch auch möglich, dass die Beschichtung lateral strukturiert ist und nur Teilbereiche der betrieblichen Rückseite mit der Beschichtung versehen sind. So können beispielsweise Displays hinter unbeschichteten Bereichen der Gerätekomponente angeordnet sein.

Die erfindungsgemäße Gerätekomponente ist vorzugsweise als Dekor- oder Bedienblende eines Haushaltsgerätes, insbesondere als Dekor- oder Bedienblende eines Haushaltgerätes ausgebildet sein oder als Dekor- oder Bedienblende eines Haushaltgerätes verwendet werden.

### Detaillierte Beschreibung der Erfindung

Nachfolgend wird die Erfindung an Hand von Ausführungsbeispielen sowie an Hand der Figuren 1 bis 11 näher erläutert. Es zeigen:
Fig. 1 eine schematische Darstellung einer Ausführungsform des erfindungsgemäßen Herstellungsverfahrens,
Fig. 2 eine schematische Darstellung einer Ausführungsform eines Ausschnitts aus einer erfindungsgemäßen Gerätekomponente,
Fig. 3 eine schematische Darstellung einer weiteren Ausführungsform einer erfindungsgemäßen Gerätekomponente, wobei die farbgebende Schicht zwei verschiedene Farbstoffe enthält,
Fig. 4 eine schematische Darstellung eines Vergleichsbeispiels ohne Haftvermittlerschicht,
Fig. 5 eine schematische Darstellung eines Ausführungsbeispiels einer erfindungsgemäßen Gerätekomponente, deren Beschichtung eine zusätzliche Deckschicht aufweist,
Fig. 6 eine schematische Darstellung eines Ausführungsbeispiels, bei dem die Beschichtung zwei farbgebende Schichten umfasst,
Fig. 7 eine schematische Darstellung eines Ausführungsbeispiels, bei dem die Beschichtung zwei farbgebende Schichten und eine Deckschicht umfasst,
Fig. 8 eine schematische Darstellung eines Ausführungsbeispiels mit einer lateral strukturierten Beschichtung,
Fig. 9 eine schematische Darstellung einer Ausführungsform einer erfindungsgemäßen Gerätekomponente in Aufsicht,
Fig. 10 eine fotographische Aufnahme einer erfindungsgemäß beschichteten Gerätekomponente in Form einer Dekorblende und
Fig. 11 die Transmission eines mit einer erfindungsgemäßen Haftvermittlerschicht beschichteten Glassubstrates sowie eines unbeschichteten Glassubstrates im Vergleich.

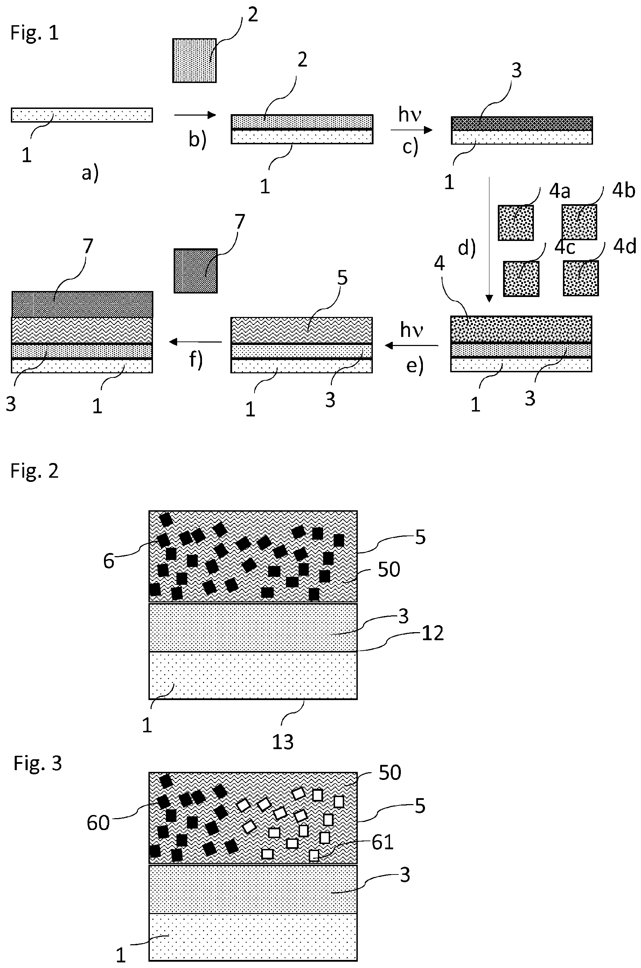

In Fig. 1 wird schematisch eine Ausführungsform des erfindungsgemäßen Verfahrens dargestellt. In Schritt a) wird hierbei ein thermisch vorgespanntes Flachglas 1 sowie eine Zubereitung 2 zur Herstellung der Haftvermittlerschicht bereitgestellt. Das Flachglas 1 dient als Substrat für die in den nachfolgenden Verfahrensschritten aufgetragene Beschichtung und weist eine Dicke von zumindest 2,5 mm auf. Gemäß einem ersten Ausführungsbeispiel enthält die Zubereitung 2 zumindest folgende Komponenten in Gew.-%

| | |
|---|---|
| Acrylic acid isobornyl ester, IBA | 46,10% |
| Hex-5-enoylsäure | 10,40% |
| Benzylacrylat | 17,40% |
| CN131B von Sartomer USA, LLC | 11,10% |
| Triphenylphosphinoxid | 2,50% |
| 2-Hydroxy-3-phenoxypropylacrylat | 8,10% |
| Glycidylphenylether | 0,80% |
| 3,4-bis-2-methoxyethylidene-2,4-hexadion | 2,40% |
| Butylhydroxytoluol | 0,80% |
| 2,2'-Methylenbis(4-methyl-6-tert-butylphenol) | 0,40% |
| Summe | 100,0% |

In Schritt b) wird die Zubereitung 2 auf die Oberfläche einer Seitenfläche des Flachglases 1 aufgebracht. Hierbei bildet die Seitenfläche des Flachglases 1, welche mit der Zubereitung 2 beschichtet wird, die betriebliche Rückseite der herzustellenden Gerätekomponente. Entsprechend bleibt die Seitenfläche des Flachglases 1, welche die betriebliche Vorderseite der Gerätekomponente bildet, unbeschichtet.

Die Viskosität der Zubereitung 2 kann über den Anteil an Reaktivverdünner sowie den Anteil an Oligomeren mit polymersierbaren Gruppen eingestellt werden. Da die Zubereitung 2 dieses Ausführungsbeispiels mit mehr als 60 Gew.-% einen relativ hohen Anteil an Reaktivverdünnern enthält, weist die Zubereitung 2 eine relativ geringe Viskosität auf, so dass sie in Schritt b) mit Hilfe eines Sprühverfahrens aufgebracht werden kann. Der Anteil an Oligomeren mit polymerisierbaren Gruppen, auch als Präpolymer bezeichnet, liegt bei 11 Gew.-%.

In Schritt c) erfolgt eine Aushärtung der in Schritt b) aufgebrachten Schicht 20 durch UV-Licht. Die Zubereitung 2 enthält dabei einen Photoinitiator. durch Einstrahlung von Licht mit einer Wellenlänge von 200-450 nm, bevorzugt 250-380 nm erfolgt somit eine Polymerisation der Monomere, die zu einer Vernetzung in der aufgebrachten Schicht 20 führt.

Bei der Zubereitung 2 des ersten Ausführungsbeispiels beträgt der Anteil an aromatischen Monomeren 36 Gew.-%. Zusätzlich enthält die Zubereitung mit 46 Gew.-% Acrylsäureisobornylester einen hohen Anteil eines aliphatischen Acrylates mit sterisch anspruchsvollem Rest, so dass der in Schritt c) auftretende Polymerisationsschrumpf gering ist.

Die Zubereitung 2 enthält ein Monomer, welches neben einer polymerisierbaren Gruppe eine Säurefunktion aufweist. Dieses ist mit einem Anteil von 10 Gew.-% in der Zubereitung enthalten.

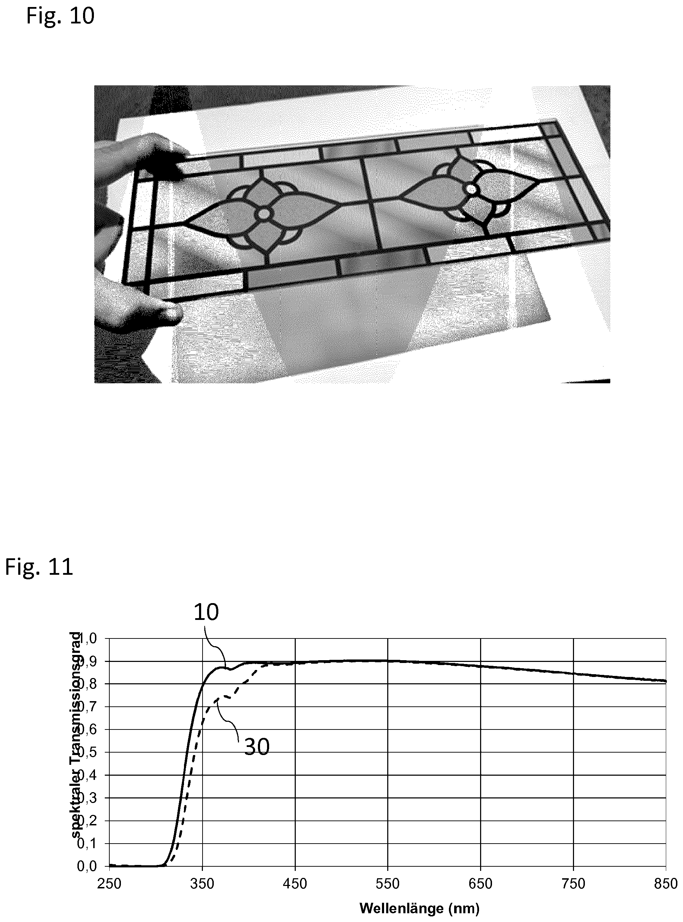

Die Säurefunktionalität des entsprechenden Monomers bildet mit den freien Hydroxygruppen der Glasoberfläche eine kovalente Verbindung auf, so dass eine gute Anhaftung des Monomers an die Glasoberfläche gewährleistet wird. Durch die Polymerisation der Monomere in Schritt c) führt der Einbau der entsprechenden Monomere in das Polymer der Haftvermittlerschicht 3 zu einer guten Anhaftung der Schicht 3 an die Oberfläche des Glassubstrats 1. Dies wird schematisch in Fig. 11 gezeigt. So ist das Polymer 30 der Haftvermittlerschicht 3 über Carboxylgruppen 31 kovalent an die Glasoberfläche 1 gebunden.

In Schritt d) erfolgt der Auftrag der Zubereitungen 4a, 4b, 4c und 4d durch ein Ink-Jet-Druckverfahren, wobei sich die Zubereitungen 4a bis 4d durch die enthaltenen Farbstoffe unterscheiden. Der Farbstoffanteil in den Zubereitungen 4a bis 4d liegt im Bereich von 2,5 bis 3 Gew.-%.

Zur Erzeugung des für den jeweiligen Druckbereichs gewünschten Farbton können Zubereitungen 4a, 4b, 4c und 4d dabei einzeln oder in unterschiedlichen Mischungsverhältnissen aufgebracht werden. Da sich die Zubereitungen 4a bis 4d im Wesentlichen lediglich in Hinblick auf die enthaltenen Farbstoffe unterscheiden, ist eine Mischung der Zubereitungen 4a bis 4d in der Schicht 4 unabhängig vom jeweiligen Mischungsverhältnis möglich. Die jeweiligen Mischungsverhältnisse an unterschiedlichen lokalen Bereichen der Schicht 4 werden dabei durch den zu erreichenden Farbton bestimmt.

In einer Ausführungsform kann das Aushärten zeilenweise am Druckkopf erfolgen. Alternativ kann das Aushärten nach dem Auftragen der gesamten Schicht erfolgen.

Die Zubereitungen 4a bis 4d enthalten folgende Komponenten:

| | |
|---|---|
| Farbstoff | 1 bis 5 Gew.-% |
| Hexa n-1,6-dioldiacrylat | 20 bis 33 Gew.-% |
| Tetrahydro-2-furanyl)methyl2-propenoat | 20 bis 35 Gew.-% |
| Sartomer sr44 | 15 bis 25 Gew.-% |

| | |
|---|---|
| Photoinitiator | 8 bis 15 Gew.-% |
| 1-Mesityl-2-methyl-1-propanon | 0 bis 20 Gew.-% |
| Dipentylerythritolhexaacrylat | 10 bis 25 Gew.-% |
| Sauerstoffinhibitor | < 1 Gew.-% |

Durch die Verwendung von Hexan-1,6-diolacrylat als difunktioneller Reaktivverdünner, d.h. eines Reaktivverdünners mit zwei polymerisierbaren Acrylfunktionalitäten, weisen die Zubereitungen 4a, 4b, 4c und 4d geringe Viskositäten auf, so dass die Zubereitungen 4a, 4b, 4c und 4d mittels Ink-Jet-Druck aufgebracht werden können. Gleichzeitig wird durch die Difunktionalität des Reaktivverdünners sowie durch Verwendung eines hexafunktionalen Acrylates in den Zubereitungen 4a, 4b, 4c und 4d bei der in Schritt e) erfolgenden Polymerisation ein hoher Vernetzungsgrad innerhalb der farbgebenden Schicht 5 gewährleistet. Die farbgebende Schicht weist somit eine hohe mechanische Stabilität auf.

Bei dem in Fig. 1 dargestellten Ausführungsbeispiel wird nach der Aushärtung der farbgebenden Schicht 5 in den Schritten f) und g) eine Deckschicht 7 aufgebracht. Die Deckschicht 7 kann hierbei eine farbgebende Schicht mit einem hohen Pigment- oder Farbstoffanteil sein. Vorzugsweise enthält die Deckschicht ein weißes Pigment, beispielsweise TiO2. Der Pigmentanteil der Deckschicht 7 im Ausführungsbeispiel liegt dabei bei 15 Gew.-% und ist somit wesentlich höher als der Farbstoffanteil in der farbgebenden Schicht 5. Die Zubereitung 7 weist dabei folgende Zusammensetzung auf:

| | |
|---|---|
| Hexa n-1,6-dioldiacrylat | 20 bis 30 Gew.-% |
| Tetrahydro-2-furanyl)methyl2-propenoat | 15 bis 25 gew.-% |
| Sartomer sr44 | 15 bis 25 Gew.-% |
| Diphenyl(2,4,6-trimethylbenzoyl) | 7 bis 15 Gew.-% |
| Farbstoff bzw. Pigment | 10 bis 20 Gew.-% |
| 1-Mesityl-2-methyl-1-propanon | 8 bis 13 Gew.-% |

Die Zubereitung 7 kann dabei mit einem Ink-Jet-Verfahren oder mit Hilfe eines Siebdrucks aufgebracht werden. Im Schritt g) erfolgt die Aushärtung Schicht 70 zur Deckschicht 7 mittels UV-Licht.

In einem zweiten Ausführungsbeispiel wird in Schritt a) eine Zubereitung 2 mit der folgenden Zusammensetzung bereitgestellt:

| | |
|---|---|
| 2-Propanol | 5 bis 10 Gew.-% |
| Dipropylenglykolmonomethyl ether | 75 bis 90 Gew.-% |
| Methanol | 1 bis 5 Gew.-% |
| 3-Methacryloxy-propyl-triethoxysilan | 2 bis 8 Gew.-% |

Im zweiten Ausführungsbeispiel erfolgt in Schritt c) die Aushärtung der Haftvermittlerschicht 3 durch Hydrolyse der Silane, so dass die Monomereinheiten des Polymers der Haftvermittlerschicht 3 über Si-O-Bindungen miteinander verknüpft sind. Die Anbindung der Haftvermittlerschicht 3 an die Oberfläche des Glassubstrates erfolgt ebenfalls über Si-O-Bindungen.

Fig. 2 zeigt eine schematische Darstellung eines Ausschnitts einer Gerätekomponente im Querschnitt. Die Haftvermittlerschicht 3 ist dabei auf der Seitenfläche 12 des Flachglases 1 aufgebracht, welche die betriebliche Rückseite der Gerätekomponente bildet. Die Seitenfläche des Flachglases 1, welche die betriebliche Vorderseite 12 bildet, weist dagegen keine Beschichtung auf. Die farbgebende Schicht 5 ist auf der Haftvermittlerschicht 3 angeordnet und umfasst eine organische, polymere Matrix 50 und einen darin eingebetteten Farbstoff 6. Fig. 2 zeigt dabei ein Ausführungsbeispiel mit einer monochromen farbgebenden Schicht 5, d.h. die farbgebende Schicht 5 weist nur einen Farbstoff 6 auf. Die Haftvermittlerschicht 3 weist eine Schichtdicke von 4 bis 5 µm auf.

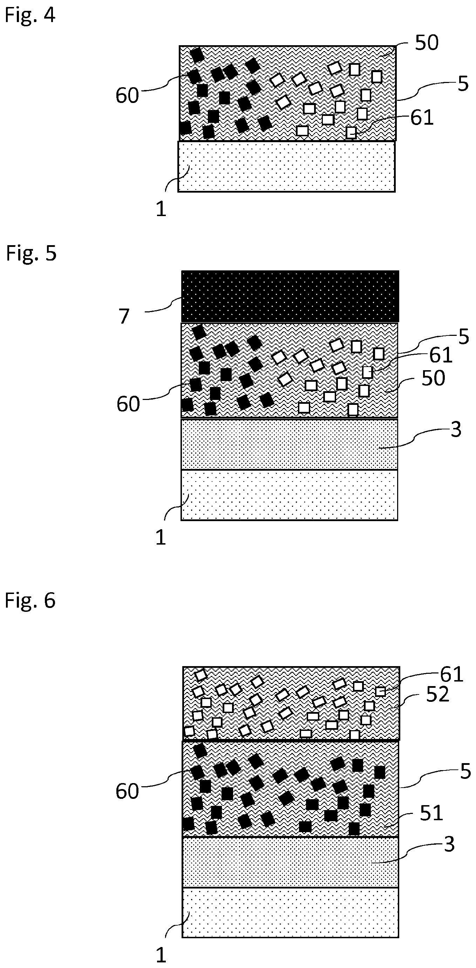

Fig. 3 zeigt dagegen ein Ausführungsbeispiel, bei dem die farbgebende Schicht 5 im gezeigten Ausschnitt zwei verschiedene Farbstoffe 60 und 61 enthält. Das in Fig. 4 dargestellte Vergleichsbeispiel unterschiedet sich von der in Fig. 3 gezeigten erfindungsgemäßen Ausführungsform dadurch, dass das Vergleichsbeispiel keine Haftvermittlerschicht aufweist. Die farbgebende Schicht 5 ist somit unmittelbar auf der Glasoberfläche aufgebracht.

In Fig. 5 ist eine Ausführungsform der Erfindung dargestellt, bei der über der farbgebenden Schicht 5 eine Deckschicht 7 aufgebracht ist.

Fig. 6 zeigt ein Ausführungsbespiel mit zwei farbgebenden Schichten 51 und 52. Die zweite farbgebende Schicht wurde dabei nach der Aushärtung der ersten farbgebenden Schicht 51 aufgebracht. In dem in Fig. 6 dargestellten Ausführungsbeispiel unterscheiden sich die beiden farbgebenden Schichten 51 und 52 durch die im gezeigten Ausschnitt enthaltenen Farbstoffe 61 und 62.

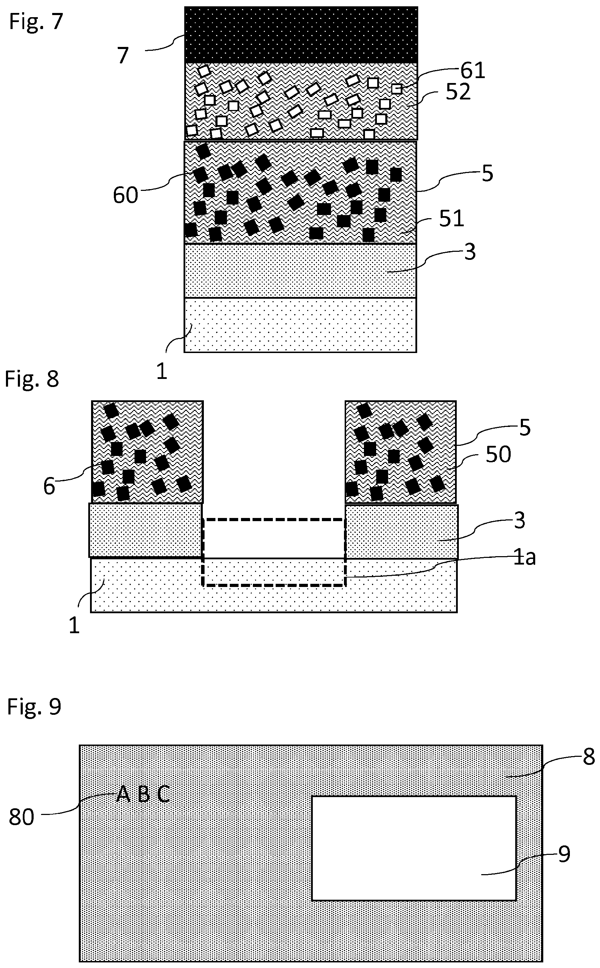

Die in Fig. 7 dargestellte Ausführungsform entspricht im Wesentlichen der in Fig. 6 gezeigten Ausführungsform. Zusätzlich ist auf der zweiten farbgebenden Schicht 52 eine Deckschicht 7 angeordnet.

Zur Ermittlung der mechanischen und chemischen Widerstandsfähigkeit der erfindungsgemäßen Gerätekomponenten wurden folgende Proben untersucht:

| | |
|---|---|
| Probe 1: | Flachglassubstrat mit Haftvermittlerschicht und einer farbgebenden Schicht (vgl. Fig. 3), |
| Probe 2: | Glassubstrat mit Haftvermittlerschicht, einer farbgebenden Schicht und einer Deckschicht (vgl. Fig. 5), |
| Probe 3: | Glassubstrat mit Haftvermittlerschicht, zwei farbgebenden Schichten und einer Deckschicht (vgl. Fig. 7), |
| Probe 4: | Vergleichsprobe umfassend ein Glassubstrat und einer farbgebenden Schicht (vgl. Fig. 4). |

Probe 4 weist als Vergleichsbeispiel keine Haftvermittlerschicht auf. Hier wurde das Glassubstrat vor dem Aufbringen der farbgebenden Schicht mit einem Plasmaverfahren vorbehandelt.

Es wurde die Kratzfestigkeit der Beschichtung, die Beständigkeit der Beschichtung gegenüber Wasser und Feuchtigkeit, die Temperaturbeständigkeit der Beschichtung sowie die chemische Beständigkeit der Beschichtung ermittelt.

Zur Bestimmung der Adhäsion der Beschichtung wurden die Proben gemäß der Messnorm ASTM D 3359 untersucht. Hierzu wurden die Proben nach dem Drucken zunächst für zumindest 24 Stunden ruhen gelassen. Anschließend wurde ein Kreuzgittertest an den Proben durchgeführt. Hierzu wurde ein Kreuzgitter aus jeweils 6 parallelen Schnitten auf den Proben aufgebracht. Anschließend wurde ein Klebefilm auf das Kreuzgitter aufgebracht, abgezogen und die Anzahl der Felder des Kreuzgitters bestimmt, bei denen eine Ablösung der Beschichtung erfolgte. Für jede Probe wurde der Test 90 mal durchgeführt. Tabelle 1 zeigt die Ergebnisse des Kreuzgittertests.

**Tabelle 1: Ergebnisse des Kreuzgittertests**

| | Anteil der abgelösten Beschichtung | Klassifikation gemäß STM D 3359 |
|---|---|---|
| Probe 1 | 0,4 % | 4B |
| Probe 2 | 1,9% | 4B |
| Probe 3 | 2% | 4B |
| Probe 4 | 75% | |

Es wird deutlich, dass bei allen untersuchten Ausführungsbeispielen der Erfindung ein nur sehr geringer Anteil der Beschichtung abgelöst wird und die Beschichtung somit eine gute Anhaftung an der Glasoberfläche zeigt. So ist der abgelöste Anteil beim Kreuzgittertest aller Proben kleiner als 5%. Dies ist auf die Haftvermittlerschicht zurück zu führen. So wird beim Kreuzgittertest des Vergleichsbeispiels (Probe 4) ohne Haftvermittlerschicht ein wesentlich höherer Anteil der Beschichtung abgelöst.

Die zur Delamination der Beschichtung benötigte Kraft wurde mit Hilfe eines Kratzstiftes Elcometer 3092 Sclerometer Hardness Tester mit einer runden Prüfspitze aus Wolframcarbid mit einem Radius der Prüfspitze von 1,0 mm (Typenbezeichnung KT003092P003) gemäß der Messnorm AS 3894.4 bestimmt. Hierbei wurde der Stift 24 Stunden nach dem Bedrucken des Glassubstrates mit einer konstanten Geschwindigkeit über eine Strecke von 10 mm über die Oberfläche der Proben geführt und die zur Delamination der Beschichtung benötigte Kraft bestimmt. Für jede Probe wurde der Test dreimal durchgeführt. Tabelle 2 fasst die Ergebnisse des Kratztestes zusammen.

**Tabelle 2: Ergebnisse des Kratztestes**

| Probe | Zur Delamination benötigte Kraft |
|---|---|
| Probe 1 | 3,5 N bis 5 N |
| Probe 2 | 5 N bis 7 N |
| Probe 3 | 14 N bis 16 N |
| Probe 4 | < 0,5 N |

Die erfindungsgemäßen Proben zeigen hierbei eine sehr hohe Kratzfestigkeit, wobei die Kratzfestigkeit mit steigender Anzahl der Schichten steigt. Es wird davon ausgegangen, dass insbesondere die Deckschicht und die farbgebenden Schichten auf Grund ihrer Zusammensetzung zur hohen Kratzfestigkeit beitragen.

Zur Ermittlung der Beständigkeit der Beschichtungen gegenüber Wasser wurden die Proben für 24 Stunden bei einer Temperatur von 20°C in Wasser gelagert. Nach einer Trocknungszeit von zumindest 24 Stunden wurden anschließend ein Kreuzgittertest, ein Test zur Bestimmung der Kratzfestigkeit sowie eine visuelle Kontrolle durchgeführt. Tabelle 3 fasst die Ergebnisse der Tests zusammen.

**Tabelle 3: Testergebnisse nach Wasserimmersion**

| Probe | Anteil der abgelösten Beschichtung (Kreuzgittertest) | Zur Delamination benötigte Kraft | Visuelle Kontrolle |
|---|---|---|---|
| Probe 1 | < 1% | 4,5 bis 6 N | Keine optische Veränderung |
| Probe 2 | < 5% | 9,5 bis 11 N | Keine optische Veränderung |
| Probe 3 | 5% bis 15% | 11,5 bis 14 N | Sichtbare Ablösungen an den Rändern der Beschichtung |
| Probe 4 | > 75 % | < 0,5 N | Film als eine Schicht fast vollständig abgelöst |

Es wird deutlich, dass die erfindungsgemäßen Beschichtungen auch nach einer Wasserimmersion eine gute Adhäsion und Kratzfestigkeit zeigen. Hierbei sinktdie Beständigkeit nach der Wasserimmersion mit zunehmender Anzahl an farbgebenden Schichten.

Des Weiteren wurde die Beständigkeit der Proben gegenüber Feuchtigkeit getestet. Hierbei wurden die Proben bei einer Temperatur von 49°C für 120 °C einer Umgebung mit einer relativen Luftfeuchtigkeit von zumindest 95% ausgesetzt. Nach einer Trocknungszeit von zumindest 24 Stunden wurde ein Test zur Ermittlung der Kratzfestigkeit, ein Kreuzgittertest sowie eine visuelle Kontrolle der Probe durchgeführt. Tabelle 4 zeigt die jeweiligen Testergebnisse.

**Tabelle 4: Testergebnisse nach Lagerung in feuchter Umgebung**

| Probe | Anteil der abgelösten Beschichtung (Kreuzgittertest) | Zur Delamination benötigte Kraft | Visuelle Kontrolle |
|---|---|---|---|
| Probe 1 | < 5% | 4,5 bis 7 N | Keine optische Veränderung |
| Probe 2 | < 22% | 9,5 bis 11 N | Keine optische Veränderung |
| Probe 3 | < 30% | 14 bis 14,5 N | Teilbereiche erscheinen Transparent auf Grund einerteilweisen Ablösung der Beschichtung vom Glas |
| Probe 4 | > 75 % | < 0,5 N | Film als eine Schicht fast vollständig abgelöst |

Die Temperaturstabilität der Beschichtung wurde getestet, indem die Proben 10 Temperaturzyklen ausgesetzt wurden, bei dem die Probe jeweils für eine Stunde bei 57°C und eine Stunde bei -23°C gelagert wurden. Anschließend wurde die Adhäsion und die Kratzfestigkeit der Proben bestimmt und eine optische Kontrolle durchgeführt. Tabelle 5 fasst die Testergebnisse zusammen.

**Tabelle 5: Testergebnisse nach 10 Temperaturzyklen**

| Probe | Anteil der abgelösten Beschichtung (Kreuzgittertest) | Zur Delamination benötigte Kraft | Visuelle Kontrolle |
|---|---|---|---|
| Probe 1 | < 1% | 4,5 bis 7,5 N | Keine optische Veränderung |
| Probe 2 | 8,5% | 10,5 bis 12,5 N | Keine optische Veränderung |
| Probe 3 | 2% | 15,5 N | Keine optische Veränderung |
| Probe 4 | > 15 % | < 0,5 N | Keine optische Veränderung |

Des Weiteren wurden die Proben für jeweils 7 Tage dauerhaft erhöhten Temperaturen von 57°C, 65°C und 74°C ausgesetzt und anschließend auf Risse in der Beschichtung untersucht. Die Ergebnisse sind in Tabelle 6 dargestellt.

**Tabelle 6: Temperaturstabilität**

| Probe | Lagerung bei 57°C | Lagerung bei 65°C | Lagerung bei 74°C |
|---|---|---|---|
| Probe 1 | Keine Risse | Keine Risse | Rissbildung auf der gesamten Oberfläche der Beschichtung |
| Probe 2 | Keine Risse | Keine Risse | Keine Risse |
| Probe 3 | Keine Risse | Keine Risse | Risse in den Randbereichen der Beschichtung |
| Probe 4 | Keine Risse | Keine Risse | Keine Risse |

Alle Ausführungsbeispiele zeigen eine hohe Temperaturbeständigkeit. So treten Risse erst bei Temperaturen oberhalb von 65°C auf. Die Rissbildung kann dabei auf unterschiedliche thermische Ausdehnungskoeffizienten von Haftvermittlerschicht und den farbgebenden Schichten zurückgeführt werden.

Zur Bestimmung der chemischen Resistenz der Proben wurden die in Tabelle 7 aufgeführten Chemikalien bzw. Substanzen auf die Oberfläche der Beschichtung aufgebracht, die Proben anschließend für sechs Zyklen zu je 7 Stunden bei Raumtemperatur gelagert und anschließend die optische Veränderung der Proben bewertet. Hierbei erfolgte die Bewertung der visuellen Veränderungen der Proben nach folgendem Schema:
0 - keine optischen Veränderungen wie beispielsweise Schatten oder Flecken visuell erkennbar
1 - leicht optische Veränderungen abhängig vom Betrachtungswinkel erkennbar
2 - optische Veränderungen auch bei unterschiedlichen Betrachtungswinkel erkennbar
3 - deutliche Veränderungen unabhängig vom jeweiligen Betrachtungswinkel erkennbar

Es wurde dabei die chemische Beständigkeit einer Probe 1 mit unterschiedlichen Farbstoffen in der farbgebenden Schicht getestet. Tabelle 7 fasst die Ergebnisse des Tests mit unterschiedlichen Druckfarben zusammen.

**Tabelle 7: chemische Beständigkeit**

| Substanz | Cyan | Magenta | Gelb | Schwarz | Weiß | Klar (kein Farbstoff) | Durchschnitt |
|---|---|---|---|---|---|---|---|
| Zitrone | 0 | 0 | 0 | 0 | 0 | 0 | 0 |
| Essig | 2 | 1 | 1 | 2 | 1 | 0 | 1 |
| Fensterreiniger | 0 | 0 | 1 | 0 | 0 | 0 | 0 |
| Ketchup | 0 | 0 | 0 | 0 | 1 | 0 | 0 |
| Senf | 0 | 1 | 0 | 0 | 0 | 0 | 0 |
| Scheuermilch | 1 | 1 | 0 | 2 | 1 | 0 | 1 |
| Haushaltsreiniger | 1 | 1 | 1 | 1 | 1 | 0 | 1 |
| Abflussreiniger | 3 | 3 | 3 | 3 | 3 | 3 | 3 |

Wie aus Tabelle 7 erkennbar ist, weist die farbgebende Schicht eine hohe chemische Beständigkeit gegenüber einer Vielzahl von Substanzen auf. So treten leichte optische Veränderungen bei Essig, Scheuermilch sowie bei dem Haushaltsreiniger auf. Hierbei wird das Ausmaß der visuellen Sichtbarkeit der Veränderungen vorwiegend durch die jeweiligen Druckfarben beeinflusst. So sind bei einer klaren Schicht ohne Farbstoff die Veränderungen weniger auffällig. Abflussreiniger führt in allen Fällen zu starken optischen Veränderungen.

Fig. 8 zeigt eine schematische Darstellung einer Ausführungsform, bei der die Beschichtung lateral strukturiert auf die Seitenfläche des Glassubstrates 1 aufgebracht ist, d.h. Teilebereiche 1a der Glasoberfläche der betrieblichen Rückseite weisen weder eine Haftvermittlerschicht 3 noch eine farbgebende Schicht 5 auf.

Fig. 9 zeigt eine Aufsicht einer Gerätekomponente, die unbeschichtete Teilbereiche 9 aufweist. Diese Teilbereiche 9 können beispielsweise als Fenster für Anzeigen oder Displays ausgebildet sein. Die Beschichtung 8 kann weiterhin auch Bereiche 80 mit dekorativen Logos, Abbildungen und/oder Symbolen wie Buchstaben oder Zahlen aufweisen.

Fig. 10 zeigt eine Fotographie einer erfindungsgemäßen Gerätekomponente.

Fig. 11 zeigtdie Darstellung des Tranmissionsverlaufs eines mit einer erfindungsgemäßen Haftvermittlerschicht beschichteten Glassubstrates 30 sowie eines unbeschichteten Glassubstrates 10 als Referenzprobe. Die Haftvermittlerschicht weist hierbei eine Dicke von 3,8 µm auf. Aus Fig. 11 wird dabei ersichtlich, dass die Transmission durch die Haftvermittlerschicht nur eine sehr geringe Änderung erfährt. Hierbei führt die Haftvermittlerschicht insbesondere für die geringeren Wellenlängen im VIS-Bereich zu einer Verringerung der Transmission, während die Transmission bei den höheren Wellenlängen im VIS-Bereich nicht oder fast nicht beeinflusst wird. Dieses Transmissionsverhalten der Haftvermittlerschicht bei unterschiedlichen Wellenlängen führt auch dazu, dass die Farbortverschiebung ΔE abhängig von derjeweiligen Wellenlänge ist. Tabelle 8 zeigt hierbei die Ergebnisse der Farbortverschiebung bei unterschiedlichen Druckfarben.

**Tabelle 8: Ergebnisse der Lab-Messung**

| | Haftvermittlerschicht auf Glassubstrat | | | Glassubstrat | | | |
|---|---|---|---|---|---|---|---|
| Farbe | L | a | b | L | a | b | ΔE |
| blau | 27,35 | 14,77 | -29,51 | 26,52 | 10,12 | -21,72 | 9,11 |
| grün | 47,9 | -66,03 | 20,18 | 46,61 | -63,28 | 18,88 | 3,3 |
| rot | 41,78 | 48,2 | 25,73 | 41,44 | 48,58 | 25,72 | 0,51 |
| schwarz | 38,01 | 1,15 | 4,95 | 33,33 | 1,96 | 6,35 | 4,95 |
| gelb | 81,02 | -10,997 | 70,72 | 81,99 | -11,28 | 75,82 | 5,2 |
| magenta | 43,23 | 57,47 | -13,57 | 43,01 | 57,12 | -10,77 | 2,83 |
| cyan-blau | 55,28 | -38,71 | -35,97 | 54 | -38,54 | -35,02 | 1,6 |

Die in Tabelle 8 aufgeführten Meßwerte wurden durch Lab-Messungen gemäß der Norm ASTM E-1164 mit einem Photospektrometer des Typs Konica Minolta cm-700 d ermittelt. Hierbei wurde zum einen eine erfindungsgemäße Haftvermittlerschicht auf ein Kalk-Natron-Glas aufgebracht, wobei die Schichtdicke der Haftvermittlerschicht 5 µm +/-1 µm betrug. Auf die Haftvermittlerschicht wurde eine farbgebende Schicht aufgebracht, die diskrete Bereiche mit den in Tabelle 8 aufgeführten Farben aufwies. Das so bedruckte Substrat wurde mit der beschichteten Seite auf ein weißes Blatt Papier gelegt und die Farborte der einzelnen Farben wurde von der unbeschichteten Seite des Glassubstrates aus im Lab-System bestimmt. Als Referenzprobe wurde ein Glassubstrat ohne Haftvermittlerschicht mit einer entsprechenden farbgebenden Schicht versehen und die Farborte der einzelnen Druckfarben bestimmt. Die Farbortverschiebung ΔE ergibt sich aus der Differenz der jeweiligen Farborte der Probe mit Haftermittlerschicht und der Referenzprobe. Die Farbortverschiebung ΔE zeigt somit den Einfluss der Haftvermittlerschicht auf den vom Anwender wahrgenommenen Farbort einer Druckfarbe der farbgebenden Schicht. Hierbei wird deutlich, dass die Farbortverschiebung durch die Haftvermittlerschicht bei blauen Farbtönen deutlich größer ist als bei roten Farbtönen. Insbesondere blaue Farbtöne erscheinen dem Anwender bei Aufsicht von der Glasseite aus als gelbstichig.

## Patentansprüche

1. Verfahren zur Herstellung einer Gerätekomponente mit betrieblicher Vorderseite und Rückseite (12) für ein Haushaltsgerät umfassend ein Substrat (1) aus thermisch vorgespanntem Flachglas mit einer Beschichtung umfassend zumindest die folgenden Verfahrensschritte:
a) Bereitstellung eines Glassubstrates (1) aus thermisch vorgespannten Glas vorzugsweise mit den Abmessungen der Gerätekomponente,
b) Aufbringen einer Zubereitung zur Herstellung einer Haftvermittlerschicht (2) auf eine Oberfläche des Glassubstrates (1), wobei die Zubereitung auf die Oberfläche des Glassubstrates aufgebracht wird, welche die betriebliche Rückseite (12) der Gerätekomponente bildet,
c) Herstellung der Haftvermittlerschicht (3) durch zumindest partielle Polymerisation der in Schritt b) aufgebrachten Zubereitung (2), wobei die Haftvermittlerschicht (3) bei einer Schichtdicke im Bereich von 1 bis 5 µm für den Wellenlängenbereich von 380 nm bis 780 nm eine Transmission von zumindest 80% aufweist oder wobei die Farbortverschiebung durch die Haftvermittlerschicht ΔE für die Farbe Blau < 15, für die Farbe Rot <5 und für die Farbe Grün <6 ist,
d) Aufbringen einer Zubereitung zur Herstellung einer organischen Farbschicht (4a, 4b, 4c, 4d) auf der in Schritt c) hergestellten Haftvermittlerschicht (3) durch Digitaldruck und
e) Herstellung der organischen Farbschicht (5) durch Polymerisation der in Schritt d) aufgebrachten Zubereitung (4a, 4b, 4c, 4d).

2. Verfahren gemäß Anspruch 1, wobei die in Schritt b) aufgebrachte Zubereitung (2) radikalisch polymerisierbare Monomere aufweist und in Schritt c) die Herstellung der Haftvermittlerschicht (3) durch radikalische Polymerisation unter Bildung von Kohlenstoff-Kohlenstoff-Bindungen und/oder unter Bildung von Silizium-Sauerstoffbindungen erfolgt und die in Schritt b) aufgebrachte Zubereitung Monomere mit zumindest einer funktionellen Gruppe zur Anbindung der Haftvermittlerschicht an die Oberfläche des Glassubstrates (1) aufweist und/oder wobei die in Schritt d) aufgebrachte Zubereitung (4a, 4b, 4c, 4d) radikalisch polymerisierbare Monomere und zumindest einen Farbstoff aufweist und in Schritt e) die Herstellung der organischen Farbschicht (5) durch radikalische Polymerisation unter Bildung von Kohlenstoff-Kohlenstoff-Bindungen erfolgt.

3. Verfahren gemäß Anspruch 1 oder 2, **gekennzeichnet durch** zumindest eines der folgenden Merkmale:
- in Schritt a) wird ein Substrat aus Flachglas mit einer Dicke im Bereich von 3 bis 8 mm, bevorzugt mit einer Dicke im Bereich von 3,5 bis 5,5 mm bereitgestellt,
- das in Schritt a) bereitgestellte Glas ist ein Kalk-Natronglas,
- in Schritt b) wird die Zubereitung (2) mittels Digitaldruck, Sprühen, Siebdruck oder durch Aufwischen auf das Glassubstrat aufgebracht,
- in Schritt b) wird die Zubereitung (2) höchstens 3 Tage, bevorzugt höchstens einen Tag und besonders bevorzugt höchstens 3 Stunden nach dem thermischen Vorspannen des Glassubstrates (1) aufgebracht,
- das Glassubstrat (1) weist in Schritt b) bei Aufbringen der Zubereitung (2) eine Temperatur von zumindest 50°C, bevorzugt eine Temperatur im Bereich von 50 bis 100 °C auf.

4. Verfahren gemäß einem der vorstehenden Ansprüche, **gekennzeichnet durch** zumindest eines der folgenden Merkmale:
- die Zubereitung (2) zur Herstellung der Haftvermittlerschicht in Schritt b) enthält zumindest ein Monomer mit Vinyl- und/oder Acrylgruppen, wobei die Monomere bevorzugt eine Säuregruppe zur Anbindung an die Oberfläche des Glassubstrates aufweisen,
- die Zubereitung (2) zur Herstellung der Haftvermittlerschicht enthält zumindest zwei Acrylate als Monomere, wobei zumindest eines der Monomere eine aromatische Gruppe aufweist und bevorzugt der Anteil an Monomeren mit aromatischer Gruppe in der Zubereitung 20 bis 70 Gew.-%, bevorzugt 40 bis 60 Gew.-% beträgt,
- die Zubereitung (2) zur Herstellung der Haftvermittlerschicht enthält als Monomer zumindest ein Silan mit polymerisierbarer Gruppe, ein Silsesquioxan mit polymerisierbarer Gruppe oder ein Vorhydrolysat mit polymerisierbarer Gruppe zumindest eines Silans mit polymerisierbarer Gruppe, bevorzugt ein Trialkoxysilan mit einer polymerisierbaren Gruppe,
- die Zubereitung (2) enthält zur Herstellung der Haftvermittlerschicht einen Radikalstarter, vorzugsweise einen Photoinitiator und/oder eine Verbindung zur Unterdrückung der Sauerstoffinhibierung, bevorzugt ein Antioxidant oder ein Radikalfänger.

5. Verfahren gemäß einem der vorstehenden Ansprüche, **gekennzeichnet durch** zumindest eines der folgenden Merkmale:
- die in Schritt d) aufgebrachte Zubereitung (4a, 4b, 4c, 4d) zur Herstellung der organischen Farbschicht (5) enthält Acrylate als polymerisierbare Gruppen,wobei die Zubereitung außerdem einen Reaktivverdünner sowie ein zumindest difunktionelles, bevorzugt zumindest ein trifunktionelles Acrylat und besonders bevorzugt zumindest ein tetrafunktionelles Acrylat enthält,
- die in Schritt d) aufgebrachte Zubereitung (4a, 4b, 4c, 4d) zur Herstellung der organischen Farbschicht weist organische Farbstoffe auf
- die in Schritt d) aufgebrachte Zubereitung (4a, 4b, 4c, 4d) zur Herstellung der organischen Farbschicht weist einen Lichtstabilisator, bevorzugt zumindest einen Lichtstabilisator aus der Gruppe mit den Elementen, HALS, Piperidinderivateoder organische Aromaten mit ausgedehnten π-Systemen auf,
- in Schritt d) werden mittels Digitaldruck räumlich begrenzt verschiedene Zubereitungen (4a, 4b, 4c, 4d) mit unterschiedlichen Farbstoffen aufgebracht, so dass die in Schritt e) erzeugte farbgebende Schicht (5) verschiedene Farbtöne aufweist und/oder der Farbstoffanteil in der in Schritt d) aufgebrachten Zubereitung (4a, 4b, 4c, 4d) 1 bis 10 Gew.-%, bevorzugt 2 bis 4 Gew.-% beträgt,
- die Schritte d) und e) werden mehrfach, bevorzugt 2 mal und besonders bevorzugt 3 mal durchgeführt,
- in Schritt e) wird die Farbschicht gemeinsam mit der Haftvermittlerschicht ausgehärtet.

6. Verfahren gemäß einem der vorstehenden Ansprüche, wobei in einem Schritt e) nachfolgenden Schritt f) eine Deckschicht (7) auf die farbgebende Schicht aufgebracht wird, bevorzugt eine Deckschicht mit einem Farbstoffanteil von zumindest 5 Gew.-%, besonders bevorzugt von zumindest 10 Gew.% auf die farbgebende Schicht aufgebracht wird.

7. Gerätekomponente mit betrieblicher Vorderseite (13) und Rückseite (12) für ein Haushaltsgerät umfassend ein Substrat (1) aus thermisch vorgespanntem Flachglas mit einer Beschichtung, wobei die Beschichtung auf der betrieblichen Rückseite (12) angeordnet ist, wobei die Beschichtung zumindest eine Haftvermittlerschicht (3) und zumindest eine organische Farbschicht (5) umfasst, wobei die organische Farbschicht eine polymere Matrix (50) und zumindest ein Farbmittel (6) aufweist und als Digitaldruck vorliegt, wobei die Haftvermittlerschicht (3) eine polymere Matrix mit funktionellen Gruppen zur Anbindung an Glas umfasst und wobei die Haftvermittlerschicht (3) zwischen dem Glassubstrat (1) und der organischen Farbschicht (5) angeordnet ist und wobei die Haftvermittlerschicht (3) bei einer Schichtdicke im Bereich von 1 bis 5 µm im Wellenlängenbereich von 380 nm bis 780 nm eine Transmission von zumindest 80% aufweist oder wobei die Farbortverschiebung durch die Haftvermittlerschicht ΔE für die Farbe Blau < 15, für die Farbe Rot <5 und für die Farbe Grün <6 ist.

8. Gerätekomponente gemäß Anspruch 7, wobei das Glassubstrat ein Kalk-Natronglas ist und/oder eine Glasdicke im Bereich von 3,5 bis 5,5 mm aufweist.

9. Gerätekomponente gemäß einem der vorstehenden Ansprüche 7 oder 8, **dadurch gekennzeichnet, dass** die Haftvermittlerschicht (3) zumindest eines der folgenden Merkmale aufweist:
- die polymere Matrix der Haftvermittlerschicht (3) wird aus Monomereinheiten zumindest eines Monomers mit radikalisch polymerisierbaren Gruppen, bevorzugt eines Monomers mit Vinyl- und/oder Acrylgruppen gebildet
- die Haftvermittlerschicht (3) umfasst ein Copolymer mit den folgenden Monomereinheiten 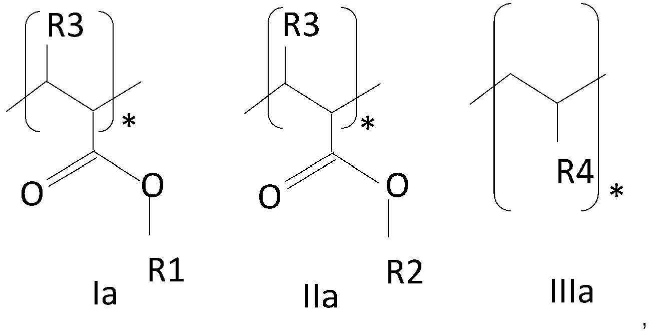 wobei R1 ein aromatischer Rest, R2 ein aliphatischer Rest oder eine aliphatische Säure ist R3 Wasserstoff oder eine Methylgruppe und R4 ein aliphatischer oder aromatischer Rest ist,
- die Matrix der Haftvermittlerschicht (3) ist durch Si-O-Si-Bindungen und Kohlenstoff-Kohlenstoff-Bindungen vernetzt und weist bevorzugt Silane mit polymerisierbaren Gruppen, Silesquioxane mit polymerisierbaren Gruppen oder Vorhydrolysate von Silanen mit polymerisierbaren Gruppen als Monomereinheiten, bevorzugt Trialkoxysilane mit einer Acryl- oder Vinylgruppe auf.

10. Gerätekomponente gemäß einem der vorstehenden Ansprüche 7 bis 9, mit zumindest einem der folgenden Merkmale:
- die Transmission der Haftvermittlerschicht (3) beträgt zumindest 95%,
- die Farbortverschiebung ΔE ist für die Farbe Blau < 10, für die Farbe Rot < 2 und für die Farbe Grün < 4
- die Haftvermittlerschicht (3) hat eine Schichtdicke im Bereich von 3 bis 8 µm, bevorzugt 4 bis 6 µm, die farbgebende Schicht (5, 51, 52) hat eine Dicke im Bereich von 5 bis 35 µm, bevorzugt 7 bis 28 µm
- die Deckschicht (7) weist eine Dicke im Bereich von 5 bis 35 µm auf.

11. Gerätekomponente gemäß einem der vorstehenden Ansprüche 7 bis 10, wobei die organische Farbschicht (5) als ein Digitaldruck mit zumindest zwei verschiedenen Farbstoffen (60, 61) vorliegt, wobei lateral strukturierte Bereiche verschiedene Farbstoffe aufweisen.

12. Gerätekomponente gemäß einem der vorstehenden Ansprüche 7 bis 11, wobei die organische Farbschicht zumindest eines der folgenden Merkmale aufweist:
- die organische Farbschicht (5, 51, 52) umfasst eine vernetzte Polyacrylmatrix (50) und zumindest einen organischen Farbstoff (6, 60, 61)
- die organische Farbschicht (5, 51, 52) weist zumindest einen Lichtstabilisator, bevorzugt zumindest einen Lichtstabilisator aus der Gruppe mit den Elementen, HALS, Piperidinderivaten oder organische Aromaten mit ausgedehnten π-Systemen auf..

13. Gerätekomponente gemäß einem der vorstehenden Ansprüche 7 bis 12, wobei die Beschichtung zumindest eine zusätzliche zweite organische Farbschicht (52), bevorzugt zumindest eine zusätzliche zweite und eine zusätzliche dritte organische Farbschicht aufweist.

14. Gerätekomponente gemäß einem der vorstehenden Ansprüche 7 bis 13, wobei die Beschichtung eine organische Farbschicht (5) aufweist und zur die Delamination der Beschichtung vom Glassubstrat benötigte Kraft 3,5 bis 5 N beträgt, die Beschichtung zwei organische Farbschichten (51, 52) aufweist und die zur Delamination der Beschichtung vom Glassubstrat benötigte Kraft 5 bis 7 N beträgt oder die Beschichtung drei organische Farbschichten (51, 52) aufweist und die zur Delamination der Beschichtung vom Glassubstrat benötigte Kraft 14 bis 16 N beträgt.

15. Gerätekomponente gemäß einem der vorstehenden Ansprüche 7 bis 14, **gekennzeichnet durch** zumindest eines der folgenden Merkmale:
- das Glassubstrat (1) weist eine Dicke von zumindest 2,5 mm, bevorzugt eine Dicke im Bereich von 3 bis 8mm auf,
- die Dekorblende weist eine Transmission im VIS-Bereich < 10 %, bevorzugt < 5% auf,
- die Beschichtung weist eine opake Deckschicht (7) auf und die opake Deckschicht (7) ist auf der obersten farbgebenden Schicht angeordnet,
- die Beschichtung ist lateral strukturiert auf dem Flachglas (1) aufgebracht und bevorzugt sind nur Teilbereiche des Flachglases beschichtet.

16. Gerätekomponente gemäß einem der vorstehenden Ansprüche 7 bis 15, wobei die Gerätekomponente eine Bedien- oder Dekorblende, bevorzugt eine Bedien- oder Dekorblende eines Haushaltsgerätes ist.

## Claims

1. A method for producing a device component having an operational front side and a rear side (12) for a household appliance, the device component comprising a substrate (1) made of thermally toughened sheet glass including a coating, the method comprising at least the method steps of:
a) providing a glass substrate (1) made of thermally toughened glass, preferably with the dimensions of the device component;
b) applying a preparation (2) for producing an adhesion promoting layer onto a surface of the glass substrate (1), the preparation being applied onto the surface of the glass substrate which defines the operational rear side (12) of the device component;
c) producing the adhesion promoting layer (3) by at least partial polymerisation of the preparation (2) applied in step b), wherein with a layer thickness in the range from 1 to 5 µm, the adhesion promoting layer (3) exhibits a transmittance of at least 80 % for the wavelength range from 380 nm to 780 nm, or wherein the shift in colour locus ΔE as caused by the adhesion promoting layer is < 15 for the blue colour, < 5 for the red colour and < 6 for the green colour;
d) applying a preparation (4a, 4b, 4c, 4d) for producing an organic colour layer onto the adhesion promoting layer (3) produced in step c) by digital printing; and
e) producing the organic colour layer (5) by polymerisation of the preparation (4a, 4b, 4c, 4d) applied in step d).

2. The method according to claim 1, wherein the preparation (2) applied in step b) has free-radically polymerisable monomers, and wherein in step c) the producing of the adhesion promoting layer (3) is accomplished by free radical polymerisation with the formation of carbon-carbon bonds and/or with the formation of silicon-oxygen bonds; and wherein the preparation applied in step b) includes monomers having at least one functional group for bonding the adhesion promoting layer to the surface of the glass substrate (1); and/or wherein the preparation (4a, 4b, 4c, 4d) applied in step d) comprises free-radically polymerisable monomers and at least one colourant and the producing of the organic colour layer (5) in step e) is accomplished by free radical polymerisation with the formation of carbon-carbon bonds.

3. The method according to claim 1 of 2, **characterized by** at least one of the following features:
- step a) includes providing a sheet glass substrate having a thickness in the range from 3 to 8 mm, preferably a thickness in the range from 3.5 to 5.5 mm;
- the glass provided in step a) is a soda-lime glass;
- step b) includes applying the preparation (2) onto the glass substrate by digital printing or spraying or screen printing or doctor-blading;
- step b) includes applying the preparation (2) no more than 3 days, preferably no more than one day and particularly preferably no more than 3 hours after the thermal toughening of the glass substrate (1);
- when the preparation (2) is applied in step b), the glass substrate (1) has a temperature of at least 50 °C, preferably a temperature in the range from 50 to 100 °C.

4. The method according to any one of the preceding claims, **characterized by** at least one of the following features:
- the preparation (2) for producing the adhesion promoting layer in step b) contains at least one monomer having vinyl and/or acrylic groups, wherein the monomers preferably have an acid group for bonding to the surface of the glass substrate;
- the preparation (2) for producing the adhesion promoting layer contains at least two acrylates as the monomers, wherein at least one of the monomers has an aromatic group and wherein, preferably, the percentage of monomers with an aromatic group in the preparation is from 20 to 70 wt%, preferably from 40 to 60 wt%;
- the preparation (2) for producing the adhesion promoting layer contains, as the monomer, at least one silane having a polymerisable group or a silsesquioxane having a polymerisable group or a prehydrolysate with a polymerisable group of at least one silane having a polymerisable group, preferably a trialkoxysilane having a polymerisable group;
- the preparation (2) for producing the adhesion promoting layer contains a free-radical initiator, preferably a photoinitiator, and/or a compound for suppressing oxygen inhibition, preferably an antioxidant or a free-radical scavenger.

5. The method according to any one of the preceding claims, **characterized by** at least one of the following features:
- the preparation (4a, 4b, 4c, 4d) applied in step d) for producing the organic colour layer (5) contains acrylates as polymerisable groups, wherein the preparation additionally contains a reactive diluent and an at least difunctional acrylate, preferably an at least one trifunctional acrylate and more preferably an at least one tetrafunctional acrylate;
- the preparation (4a, 4b, 4c, 4d) applied in step d) for producing the organic colour layer includes organic colourants;
- the preparation (4a, 4b, 4c, 4d) applied in step d) for producing the organic colour layer includes a light stabilizer, preferably at least one light stabilizer from the group consisting of HALS, piperidine derivatives and organic aromatics with extended π-systems;
- step d) includes locally applying different preparations (4a, 4b, 4c, 4d) including different colourants by digital printing, such that the colour-imparting layer (5) produced in step e) includes different colour shades and/or the percentage of colourants in the preparation (4a, 4b, 4c, 4d) applied in step d) is from 1 to 10 wt%, preferably from 2 to 4 wt%;
- steps d) and e) are carried out repeatedly, preferably 2 times and particularly preferably 3 times;
- step e) includes curing the colour layer together with the adhesion promoting layer.

6. The method according to any one of the preceding claims, wherein step e) is followed by a step f) that includes applying a cover layer (7) onto the colour-imparting layer, preferably applying a cover layer containing a percentage of colourants of at least 5 wt%, particularly preferably at least 10 wt%, onto the colour-imparting layer.

7. A device component having operational front (13) and rear (12) sides for a household appliance, comprising a substrate (1) made of thermally toughened sheet glass including a coating, wherein the coating is disposed on the operational rear side (12), the coating comprising at least one adhesion promoting layer (3) and at least one organic colour layer (5), wherein the organic colour layer includes a polymer matrix (50) and at least one colourant (6) and is provided in the form of a digital print, wherein the adhesion promoting layer (3) comprises a polymer matrix with functional groups for bonding to glass, and wherein the adhesion promoting layer (3) is disposed between the glass substrate (1) and the organic colour layer (5), and wherein with a layer thickness ranging from 1 to 5 µm, the adhesion promoting layer (3) exhibits a transmittance of at least 80 % in the wavelength range from 380 nm to 780 nm, or wherein the shift in colour locus ΔE as caused by the adhesion promoting layer is < 15 for the blue colour, < 5 for the red colour and < 6 for the green colour.

8. The device component according to claim 7, wherein the glass substrate is a soda-lime glass and/or has a glass thickness ranging from 3.5 to 5.5 mm.

9. The device component according to any one of the preceding claims 7 or 8, **characterized in that** the adhesion promoting layer (3) has at least one of the following features:
- the polymeric matrix of the adhesion promoting layer (3) is defined by monomer units of at least one monomer with free-radically polymerisable groups, preferably of a monomer having vinyl and/or acrylic groups;
- the adhesion promoting layer (3) comprises a copolymer with the following monomer units 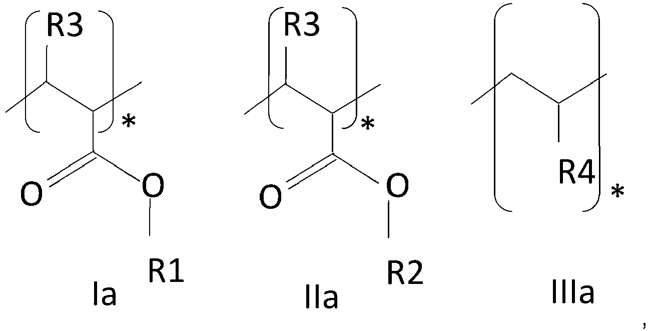 where R1 is an aromatic radical, R2 is an aliphatic radical or an aliphatic acid, R3 is hydrogen or a methyl group and R4 is an aliphatic or aromatic radical;
- the matrix of the adhesion promoting layer (3) is crosslinked by Si-G-Si bonds and carbon-carbon bonds and preferably includes silanes with polymerisable groups, silesquioxanes with polymerisable groups or prehydrolysates of silanes with polymerisable groups as the monomer units, preferably trialkoxysilanes with an acrylic or vinyl group.

10. The device component according to any one of the preceding claims 7 to 9, comprising at least one of the following features:
- the adhesion promoting layer (3) has a transmittance of at least 95 %;
- the shift in colour locus ΔE is < 10 for the blue colour, < 2 for the red colour and < 4 for the green colour;
- the adhesion promoting layer (3) has a layer thickness ranging from 3 to 8 µm, preferably from 4 to 6 µm, the colour-imparting layer (5, 51, 52) has a thickness ranging from 5 to 35 µm, preferably from 7 to 28 µm;
- the cover layer (7) has a thickness ranging from 5 to 35 µm.

11. The device component according to any one of the preceding claims 7 to 10, wherein the organic colour layer (5) is provided in the form of a digital print including at least two different colourants (60, 61), wherein laterally patterned areas include different colourants.

12. The device component according to any one of the preceding claims 7 to 11, wherein the organic colour layer comprises at least one of the following features:
- the organic colour layer (5, 51, 52) comprises a crosslinked polyacrylic matrix (50) and at least one organic colourant (6, 60, 61);
- the organic colour layer (5, 51, 52) comprises at least one light stabilizer, preferably at least one light stabilizer selected from the group consisting of HALS, piperidine derivatives and organic aromatics with extended π-systems.

13. The device component according to any one of the preceding claims 7 to 12, wherein the coating comprises at least one additional second organic colour layer (52), preferably at least an additional second and an additional third organic colour layer.

14. The device component according to any one of the preceding claims 7 to 13, wherein the coating comprises an organic colour layer (5) and the force required to delaminate the coating from the glass substrate is 3.5 to 5 N; or the coating comprises two organic colour layers (51, 52) and the force required to delaminate the coating from the glass substrate is 5 to 7 N; or the coating comprises three organic colour layers (51, 52) and the force required to delaminate the coating from the glass substrate is 14 to 16 N.

15. The device component according to any one of the preceding claims 7 to 14, **characterized by** at least one of the following features:
- the glass substrate (1) has a thickness of at least 2.5 mm, preferably a thickness ranging from 3 to 8 mm;
- the decorative panel exhibits a transmittance of < 10 %, preferably < 5 % in the VIS range;
- the coating comprises an opaque cover layer (7) and the opaque cover layer (7) is disposed on top of the uppermost colour-imparting layer;
- the coating is applied on the sheet glass (1) in a laterally patterned manner, and preferably only portions of the sheet glass are coated.

16. The device component according to any one of the preceding claims 7 to 15, wherein the device component is a control panel or a decorative panel, preferably a control panel or a decorative panel of a household appliance.

## Revendications

1. Procédé de fabrication d'un composant d'appareil avec un côté avant et un côté arrière (12) opérationnels pour un appareil électroménager comprenant un substrat (1) composé d'un verre plat précontraint thermiquement avec un revêtement, comprenant au moins les étapes de procédé suivantes :
a) de fourniture d'un substrat en verre (1) composé d'un verre précontraint thermiquement de préférence avec les dimensions du composant d'appareil,
b) d'application d'une préparation pour fabriquer une couche de promoteur d'adhérence (2) sur une surface du substrat en verre (1), dans lequel la préparation est appliquée sur la surface du substrat en verre, laquelle forme le côté arrière (12) opérationnel du composant d'appareil,
c) de fabrication de la couche de promoteur d'adhérence (3) par au moins une polymérisation partielle de la préparation (2) appliquée lors de l'étape b), dans lequel la couche de promoteur d'adhérence (3) présente, pour une épaisseur de couche dans la plage de 1 à 5 µm pour la plage de longueurs d'onde de 380 nm à 780 nm, une transmission d'au moins 80 % ou dans lequel le déplacement de localisation chromatique à travers la couche de promoteur d'adhérence ΔE est pour la couleur bleue < 15, pour la couleur rouge < 5 et pour la couleur verte < 6,
d) d'application d'une préparation pour fabriquer une couche de couleur organique (4a, 4b, 4c, 4d) sur la couche de promoteur d'adhérence (3) fabriquée à l'étape c) par impression numérique et
e) de fabrication de la couche de couleur organique (5) par polymérisation de la préparation (4a, 4b, 4c, 4d) appliquée à l'étape d).

2. Procédé selon la revendication 1, dans lequel la préparation (2) appliquée à l'étape b) présente des monomères polymérisables par voie radicalaire et la fabrication de la couche de promoteur d'adhérence (3) est effectuée à l'étape c) par polymérisation par voie radicalaire en formant des liaisons carbone-carbone et/ou en formant des liaisons silicium-oxygène et la préparation appliquée lors de l'étape b) présente des monomères avec au moins un groupe fonctionnel pour rattacher la couche de promoteur d'adhérence à la surface du substrat en verre (1) et/ou dans lequel la préparation (4a, 4b, 4c, 4d) appliquée à l'étape d) présente des monomères polymérisables par voie radicalaire et au moins une matière colorante et la fabrication de la couche de couleur organique (5) est effectuée à l'étape e) par polymérisation par voie radicalaire en formant des liaisons carbone-carbone.

3. Procédé selon la revendication 1 ou 2, caractérisé en par au moins une des caractéristiques suivantes :
- un substrat en verre plat avec une épaisseur dans la plage de 3 à 8 mm, de manière préférée avec une épaisseur dans la plage de 3,5 à 5,5 mm, est fourni à l'étape a),
- le verre fourni à l'étape a) est un verre sodocalcique,
- la préparation (2) est appliquée à l'étape b) sur le substrat en verre par impression numérique, par pulvérisation, par sérigraphie ou par nettoyage,
- la préparation (2) est appliquée à l'étape b) au maximum 3 jours, de manière préférée au maximum un jour et de manière particulièrement préférée au maximum 3 heures après la précontrainte thermique du substrat en verre (1),
- le substrat en verre (1) présente à l'étape b), lors de l'application de la préparation (2), une température d'au moins 50 °C, de manière préférée une température dans la plage de 50 à 100 °C.

4. Procédé selon l'une quelconque des revendications précédentes, **caractérisé par** au moins une des caractéristiques suivantes :
- la préparation (2) pour fabriquer la couche de promoteur d'adhérence à l'étape b) contient au moins un monomère avec des groupes vinyle et/ou acryle, dans lequel les monomères présentent de manière préférée un groupe acide destiné à être attaché à la surface du substrat en verre,
- la préparation (2) pour fabriquer la couche de promoteur d'adhérence contient au moins deux acrylates en tant que monomères, dans lequel au moins un des monomères présente un groupe aromatique et de manière préférée la proportion en monomères avec un groupe aromatique dans la préparation va de 20 à 70 % en poids, de manière préférée de 40 à 60 % en poids,
- la préparation (2) pour fabriquer la couche de promoteur d'adhérence contient en tant que monomère au moins un silane avec un groupe polymérisable, un silsesquioxane avec un groupe polymérisable ou un préhydrolysat avec un groupe polymérisable d'au moins un silane avec un groupe polymérisable, de manière préférée un trialcoxysilane avec un groupe polymérisable,
- la préparation (2) contient pour fabriquer la couche de promoteur d'adhérence un agent d'amorçage de radicaux, de préférence un photoinitiateur et/ou un composé pour supprimer l'inhibition d'oxygène, de manière préférée un agent antioxydant ou un capteur de radicaux.

5. Procédé selon l'une quelconque des revendications précédentes, **caractérisé par** au moins une des caractéristiques suivantes :
- la préparation (4a, 4b, 4c, 4d) appliquée à l'étape d) pour fabriquer la couche de couleur organique (5) contient des acrylates en tant que groupes polymérisables, dans lequel la préparation contient par ailleurs un diluant réactif ainsi qu'un acrylate au moins difonctionnel, de manière préférée au moins un acrylate trifonctionnel et de manière particulièrement préférée au moins un acrylate tétrafonctionnel,
- la préparation (4a, 4b, 4c, 4d) appliquée à l'étape d) pour fabriquer la couche de couleur organique présente des matières colorantes organiques,
- la préparation (4a, 4b, 4c, 4d) appliquée à l'étape d) pour fabriquer la couche de couleur organique présente un stabilisateur de lumière, de manière préférée au moins un stabilisateur de lumière issu du groupe avec les éléments, HALS, les dérivés de pipéridine ou aromates organiques avec des systèmes π étendus,
- différentes préparations (4a, 4b, 4c, 4d) avec des matières colorantes différentes sont appliquées à l'étape d) par impression numérique de sorte que la couche colorante (5) générée à l'étape e) présente différentes nuances de couleur et/ou la proportion de matière colorante dans la préparation (4a, 4b, 4c, 4d) appliquée à l'étape d) va de 1 à 10 % en poids, de manière préférée de 2 à 4 % en poids,
- les étapes d) et e) sont effectuées à maintes reprises, de manière préférée 2 fois et de manière particulièrement préférée 3 fois,
- à l'étape e), la couche de couleur est durcie conjointement avec la couche de promoteur d'adhérence.

6. Procédé selon l'une quelconque des revendications précédentes, dans lequel dans une étape f) suivant l'étape e), une couche de recouvrement (7) est appliquée sur la couche colorante, de manière préférée une couche de recouvrement avec une proportion de matière colorante d'au moins 5 % en poids, de manière particulièrement préférée d'au moins 10 % en poids est appliquée sur la couche colorante.

7. Composant d'appareil avec un côté avant (13) et un côté arrière (12) opérationnels pour un appareil électroménager comprenant un substrat (1) en verre plat précontraint thermiquement avec un revêtement, dans lequel le revêtement est disposé sur le côté arrière (12) opérationnel, dans lequel le revêtement comprend au moins une couche de promoteur d'adhérence (3) et au moins une couche de couleur organique (5), dans lequel la couche de couleur organique présente une matrice polymère (50) et au moins un agent colorant (6) et est présente en tant qu'impression numérique, dans lequel la couche de promoteur d'adhérence (3) comprend une matrice polymère avec des groupes fonctionnels à attacher à du verre et dans lequel la couche de promoteur d'adhérence (3) est disposée entre le substrat en verre (1) et la couche de couleur organique (5) et dans lequel la couche de promoteur d'adhérence (3) présente pour une épaisseur de couche dans la plage de 1 à 5 µm dans la plage de longueurs d'onde de 380 nm à 780 nm une transmission d'au moins 80 % ou dans lequel le déplacement de localisation chromatique à travers la couche de promoteur d'adhérence ΔE est pour la couleur bleue < 15, pour la couleur rouge < 5 et pour la couleur verte < 6.

8. Composant d'appareil selon la revendication 7, dans lequel le substrat en verre est un verre sodocalcique et/ou présente une épaisseur de verre dans la plage de 3,5 à 5,5 mm.

9. Composant d'appareil selon l'une quelconque des revendications précédentes 7 ou 8, **caractérisé en ce que** la couche de promoteur d'adhérence (3) présente au moins une des caractéristiques suivantes :
- la matrice polymère de la couche de promoteur d'adhérence (3) est formée à partir de motifs de monomère d'au moins un monomère avec des groupes polymérisables par voie radicalaire, de manière préférée d'un monomère avec des groupes vinyle et/ou acryle,
- la couche de promoteur d'adhérence (3) comprend un copolymère avec les motifs de monomère suivants 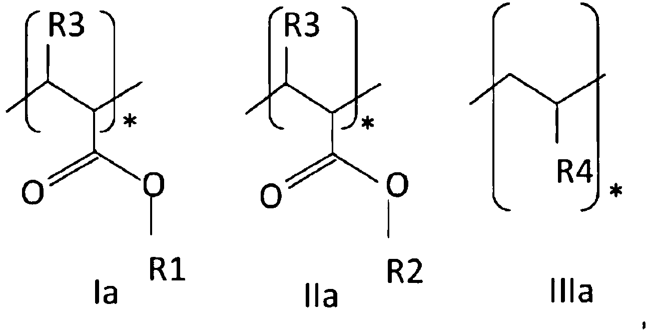 dans lequel R1 est un radical aromatique, R2 est un radical aliphatique ou un acide aliphatique, R3 est de l'hydrogène ou un groupe méthyle et R4 est un radical aliphatique ou aromatique,
- la matrice de la couche de promoteur d'adhérence (3) est réticulée par des liaisons Si-O-Si et des liaisons carbone-carbone et présente de manière préférée des silanes avec des groupes polymérisables, des silsesquioxane avec des groupes polymérisables ou des préhydrolysats de silanes avec des groupes polymérisables en tant que motifs de monomère, de manière préférée des trialcoxysilanes avec un groupe acryle ou vinyle.

10. Composant d'appareil selon l'une quelconque des revendications précédentes 7 à 9, avec au moins une des caractéristiques suivantes :
- la transmission de la couche de promoteur d'adhérence (3) est d'au moins 95 %,
- le déplacement de localisation chromatique ΔE est pour la couleur bleue < 10, pour la couleur rouge < 2 et pour la couleur verte < 4,
- la couche de promoteur d'adhérence (3) a une épaisseur de couche dans la plage de 3 à 8 µm, de manière préférée de 4 à 6 µm, la couche colorante (5, 51, 52) a une épaisseur dans la plage de 5 à 35 µm, de manière préférée de 7 à 28 µm,
- la couche de recouvrement (7) présente une épaisseur dans la plage de 5 à 35 µm.

11. Composant d'appareil selon l'une quelconque des revendications précédentes 7 à 10, dans lequel la couche de couleur organique (5) est présente en tant qu'une impression numérique avec au moins deux différentes matières colorantes (60, 61), dans lequel des zones structurées latéralement présentent différentes matières colorantes.

12. Composant d'appareil selon l'une quelconque des revendications précédentes 7 à 11, dans lequel la couche de couleur organique présente au moins une des caractéristiques suivantes :
- la couche de couleur organique (5, 51, 52) comprend une matrice polyacrylique (50) réticulée et au moins une matière colorante (6, 60, 61) organique,
- la couche de couleur organique (5, 51, 52) présente au moins un stabilisateur de lumière, de manière préférée au moins un stabilisateur de lumière issu du groupe avec les éléments, HALS, dérivés de pipéridine ou aromates organiques avec des systèmes π étendus.

13. Composant d'appareil selon l'une quelconque des revendications 7 à 12, dans lequel le revêtement présente au moins une deuxième couche de couleur organique (52), de manière préférée au moins une deuxième couche de couleur organique supplémentaire et une troisième couche de couleur organique supplémentaire.

14. Composant d'appareil selon l'une quelconque des revendications 7 à 13, dans lequel le revêtement présente une couche de couleur organique (5) et présente une force de 3,5 à 5 N requise pour la délamination du revêtement du substrat en verre, le revêtement présente deux couches de couleur organiques (51, 52) et la force requise pour la délamination du revêtement du substrat en verre va de 5 à 7 N ou le revêtement présente trois couches de couleur organiques (51, 52) et la force requise pour la délamination du revêtement du substrat en verre va de 14 à 16 N.

15. Composant d'appareil selon l'une quelconque des revendications précédentes 7 à 14, **caractérisé par** au moins une des caractéristiques suivantes :
- le substrat en verre (1) présente une épaisseur d'au moins 2,5 mm, de manière préférée une épaisseur dans la plage de 3 à 8 mm,
- le panneau de décoration présente une transmission dans la plage de VIS < 10 %, de manière préférée < 5 %,
- le revêtement présente une couche de recouvrement (7) opaque et la couche de recouvrement (7) opaque est disposée sur la couche colorante la plus haute,
- le revêtement est appliqué sur le verre plat (1) de manière structurée latéralement et de manière préférée seules des zones partielles du verre plat sont revêtues.

16. Composant d'appareil selon l'une quelconque des revendications 7 à 15, dans lequel le composant d'appareil est un panneau de commande ou de décoration, de manière préférée un panneau de commande ou de décoration d'un appareil électroménager.
